# EUROPEAN PATENT APPLICATION

(11) **EP 4 645 955 A1**
(43) Date of publication of application: **05.11.2025**
(21) Application number: 23910598.4
(22) Date of filing: 26.12.2023
(51) Int. Cl.: H04W 36/08

(54) **METHOD AND DEVICE USED FOR WIRELESS COMMUNICATION**

(30) Priority: 31.12.2022 CN 202211740564
(71) Applicant: SHANGHAI LANGBO COMMUNICATION TECHNOLOGY COMPANY LIMITED, Shanghai 200240 (CN)
(72) Inventor: CHEN, Yu, Shanghai 201206 (CN); ZHANG, Xiaobo, Shanghai 201206 (CN)
(74) Representative: Gunzelmann, Rainer
(86) International application number: PCT/CN2023/141933
(87) International publication number: WO 2024/140675

(57) **Abstract**

The present application discloses a method and device used for wireless communication. The method comprises: receiving K RRC signaling, each of the K RRC signaling being used for configuring at least one cell; and K being an integer greater than 1; receiving second signaling, the second signaling being used for triggering the application of one of the K RRC signaling; in response to any one of the K RRC signaling being unable to be successfully applied, executing a first operation set, the first operation set comprising cell selection; a first cell being a cell selected in the cell selection included in the first operation set; wherein, whether the first operation set comprises sending first information, depends on whether the first cell is configured by at least one of the K RRC signaling; and only when the first cell is not configured by any of the K RRC signaling, the first operation set comprises sending the first information. The present application achieves better mobility management.

## Description

### Technical Field

The present application relates to a transmission method and apparatus in a wireless communication system, to mobility management, and in particular to reducing latency and avoiding communication interruption.

### Background Art

In the future, the application scenarios of a wireless communication system will become more and more diversified, and different application scenarios impose different performance requirements for the system. In order to meet the different performance requirements of various application scenarios, the 3GPP (3rd Generation Partner Project) RAN (Radio Access Network) #72nd plenary meeting decided to study the new radio (NR) technology (or Fifth Generation, 5G), and the 3GPP RAN #75th plenary meeting approved an NR WI (Work Item) and started the standardization work on NR.

In communications, both LTE (Long Term Evolution) and 5G NR involve accurate reception of reliable information, an optimized energy efficiency ratio, determination of information validity, flexible resource allocation, a scalable system structure, efficient non-access layer information processing, low service interruption and drop rates, and support for low power consumption. This is of great significance to normal communication between base stations and user equipment, reasonable scheduling of resources, and balancing of system loads. It can be said to be the cornerstone of high throughput, meeting the communication needs of various services, improving spectrum utilization, and improving the quality of service. It is indispensable for eMBB (enhanced Mobile BroadBand), URLLC (Ultra Reliable Low Latency Communication) and eMTC (enhanced Machine Type Communication). At the same time, there are extensive demands in IIoT (Industrial Internet of Things), V2X (Vehicular to X), Device to Device, unlicensed spectrum communication, user communication quality monitoring, network planning optimization, NTNs (Non Terrestrial Networks), TNs (Terrestrial Networks), Dual connectivity systems, radio resource management and multi-antenna codebook selection, signaling design, neighbor management, service management, and beamforming. Information transmission methods are divided into broadcast and unicast. Both transmission methods are essential for 5G systems because they are very helpful in meeting the above demands. UE can connect to networks directly or through a relay.

As the scenarios and complexity of the systems continue to increase, higher requirements are put forward for reducing the interruption rate, reducing latency, enhancing reliability, enhancing system stability, service flexibility, and power saving. At the same time, the compatibility between different versions and different systems also needs to be considered during system design.

The meanings of the concepts, terminologies and abbreviations in the present application can refer to 3GPP standards, including but not limited to:
https://www.3gpp.org/ftp/Specs/archive/21_series/21.905/21905-h10.zip
https://www.3gpp.org/ftp/Specs/archive/38_series/38.300/38300-h10.zip
https://www.3gpp.org/ftp/Specs/archive/38_series/38.331/38331-h10.zip
https://www.3gpp.org/ftp/Specs/archive/38_series/38.321/38321-h10.zip
https://www.3gpp.org/ftp/Specs/archive/38_series/38.304/38304-h10.zip

### Summary of the Invention

Among the latest 3GPP research topics, mobility management is a very important topic. In traditional cell handover, a method based on a layer 3 (L3), namely an RRC (radio resource control) signaling, is adopted, that is, a terminal reports a measurement result of an L3, a network selects an appropriate target cell according to the measurement result and sends an RRC signaling for indicating the handover to the target cell, and the terminal executes the RRC signaling for the handover. The execution process generally comprises determining the target cell, applying a configuration of the target cell, synchronizing with the target cell, initiating random access, and sending a message of the completion of the handover. The entire handover process relates to: interpretation and execution of a signaling, downlink synchronization, uplink synchronization, and completion of remaining handover steps. Generally speaking, this takes tens of milliseconds to one or two hundred milliseconds. The impact on services that are sensitive to latency requirements is relatively large. For some services, if the latency exceeds 20 milliseconds, the quality of service will be significantly reduced. In 5G, cells are getting smaller and smaller, and handover is becoming more frequent. The problem of reduction of the quality of service caused by handover latency is becoming more serious. A feasible solution is to use a measurement result of a lower layer, namely an L1 physical layer, and use a signaling of a lower layer, such as a physical layer or MAC layer, to indicate the handover. Combined with some pre-configured RRC signalings and measures such as terminal pre-synchronization, latency of handover can be greatly reduced. Latency of such handover is relatively short, and when it is executed within the same gNB or within one DU (data unit), it can be further optimized to reduce the impact of handover on the services. In the new handover method, which can also be called a cell switch method, a signaling or message that triggers the handover can be relatively small. Therefore, even when the communication quality is reduced, they can still be transmitted correctly. However, there are still some challenges to face in such a handover method. First, although the measurement result of an L1 is obtained faster, it is not as stable as the measurement result of an L3, which is more likely to cause ping-pong handover. Similarly, when the handover to a new cell is conducted, the quality of the target cell may not be ideal. According to the traditional handover method, the handover failure will be caused, and further disconnection will be caused. These must be avoided through efforts. In order to help the network optimize the parameters, auxiliary information can be sent after the handover failure, but it is better to send the auxiliary information at an appropriate time, otherwise it may interfere with the network's decision-making instead. Therefore, an urgent problem to be solved is how to avoid handover failure and how to appropriately send auxiliary information related to the failure.

In response to the above problems, the present application provides a solution.

It should be noted that, in the absence of conflicts, embodiments and features in the embodiments of any node of the present application may be applied to any other node. In the absence of conflicts, the embodiments and features in the embodiments of the present application may be arbitrarily combined with each other. At the same time, the method proposed in the present application can also be used to solve other problems in communication.

The present application discloses a method used in a first node for wireless communication, comprising:
receiving K RRC signalings, each of the K RRC signalings being used for configuring at least one cell; and K being an integer greater than 1;
receiving a second signaling, the second signaling being used for triggering the application of one of the K RRC signalings; and
in response to any one of the K RRC signalings being unable to be successfully applied, executing a first operation set, the first operation set comprising cell selection; and a first cell being a cell selected in the cell selection comprised in the first operation set,
wherein, whether the first operation set comprises sending first information depends on whether the first cell is configured by at least one of the K RRC signalings; only when the first cell is not configured by any of the K RRC signalings, the first operation set comprises sending the first information; and successfully applying one RRC signaling comprises applying one cell configured by the RRC signaling as a SpCell.

As one embodiment, the problems to be solved by the present application comprise: how to ensure the reliability of communication, how to reduce the latency of handover, how to support cell handover triggered by a lower layer (a protocol layer below an RRC layer), how to ensure the continuity of data in the handover process, how to coordinate radio link failure and handover process, how to appropriately determine handover failure, and how to help the network optimize the handover.

As one embodiment, the benefits of the above method comprise: more flexibility, conduciveness to reducing the latency of handover, ensured quality of service, ensured service continuity, improved reliability of handover, avoidance of the impact of handover on data transmission, avoidance of the communication interruption, and reduced overhead of signalings or messages.

Specifically, according to one aspect of the present application, the cell selection comprised in the first operation set comprises: preferentially selecting a cell configured by the K RRC signalings, and after one cell configured by the K RRC signalings is selected, applying an RRC signaling among the K RRC signalings that is used for configuring the one cell.

Specifically, according to one aspect of the present application, the cell selection comprised in the first operation set comprises: before successfully applying one of the K RRC signalings, at most N cell selections are executed in a cell configured by the K RRC signalings, N being a positive integer not greater than K.

Specifically, according to one aspect of the present application, a meaning of a phrase "any one of the K RRC signalings being unable to be successfully applied" comprises: a first timer expires; and the first timer is started with the application of any one of the K RRC signalings.

Specifically, according to one aspect of the present application, the meaning of the phrase "any one of the K RRC signalings being unable to be successfully applied" comprises: N cell selections are executed in a cell configured by the K RRC signalings before successfully applying one of the K RRC signalings.

Specifically, according to one aspect of the present application, the meaning of the phrase "any one of the K RRC signalings being unable to be successfully applied" comprises: a quality of a cell configured by the any one of the K RRC signalings fails to meet a first quality requirement.

Specifically, according to one aspect of the present application, the first information comprises an L1-based measurement result and an L3-based measurement result.

Specifically, according to one aspect of the present application, the first information is used for indicating a reason for cell switch failure.

Specifically, according to one aspect of the present application, the first information is used for indicating the first cell.

Specifically, according to one aspect of the present application, the first node is an Internet of Things terminal.

Specifically, according to one aspect of the present application, the first node is user equipment.

Specifically, according to one aspect of the present application, the first node is a relay.

Specifically, according to one aspect of the present application, the first node is an access network device.

Specifically, according to one aspect of the present application, the first node is a vehicle-mounted terminal.

Specifically, according to one aspect of the present application, the first node is an aircraft.

Specifically, according to one aspect of the present application, the first node is a mobile phone.

The present application discloses a first node used for wireless communication, comprising:
a first receiver, receiving K RRC signalings, each of the K RRC signalings being used for configuring at least one cell; and K being an integer greater than 1;
the first receiver, receiving a second signaling, the second signaling being used for triggering the application of one of the K RRC signalings; and
a first processor, in response to any one of the K RRC signalings being unable to be successfully applied, executing a first operation set, the first operation set comprising cell selection; and a first cell being a cell selected in the cell selection comprised in the first operation set,
wherein, whether the first operation set comprises sending first information depends on whether the first cell is configured by at least one of the K RRC signalings; only when the first cell is not configured by any of the K RRC signalings, the first operation set comprises sending the first information; and successfully applying one RRC signaling comprises applying one cell configured by the RRC signaling as a SpCell (Special Cell).

As one embodiment, compared with the traditional solution, the present application has the following advantages:
supporting a fast handover process within the same DU (data unit);
reducing the latency of handover;
ensuring the continuity of data in a handover process;
minimizing the impact of handover on data transmission;
supporting L1L2 mobility management;
avoiding the communication interruption;
reducing the impact of radio link failure on communication;
supporting fast recovery in case of radio link failure;
helping to optimize the network;
reducing handover failure; and
reducing the transmission of unnecessary auxiliary information.

### Brief Description of the Drawings

Other features, purposes and advantages of the present application will become more apparent from reading the detailed description of the non-limiting embodiments made with reference to the following drawings:
FIG. 1 shows a flowchart of receiving K RRC signalings, receiving a second signaling, and executing a first operation set according to one embodiment of the present application;
FIG. 2 shows a schematic diagram of a network architecture according to one embodiment of the present application;
FIG. 3 shows a schematic diagram of an embodiment of a radio protocol architecture for a user plane and a control plane according to one embodiment of the present application;
FIG. 4 shows a schematic diagram of a first communication device and a second communication device according to one embodiment of the present application;
FIG. 5 shows a flowchart of radio signal transmission according to one embodiment of the present application;
FIG. 6 shows a schematic diagram of a signaling format according to one embodiment of the present application;
FIG. 7 shows a schematic diagram of a second signaling being used for triggering the application of one of K RRC signalings according to one embodiment of the present application;
FIG. 8 shows a schematic diagram of a first signaling being used for configuring a first signal according to one embodiment of the present application;
FIG. 9 shows a schematic diagram of a first signal being used for reporting a measurement result or a recommended target cell or a recommended reference signal resource according to one embodiment of the present application;
FIG. 10 illustrates a schematic diagram of each of K RRC signalings being used for configuring at least one cell according to one embodiment of the present application; and
FIG. 11 illustrates a schematic diagram of a processing apparatus used in a first node according to one embodiment of the present application.

### Detailed Description of Embodiments

The technical solution of the present application will be further described in detail below in conjunction with the drawings. It should be noted that, in the absence of conflicts, embodiments and the features in the embodiments of the present application can be arbitrarily combined with each other.

### Embodiment 1

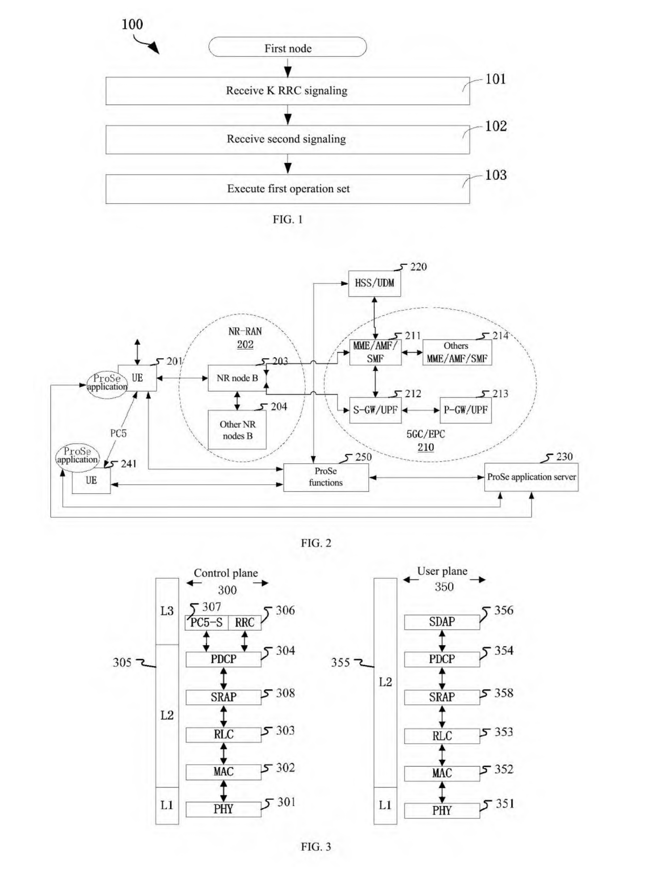

Embodiment 1 illustrates a flowchart of receiving K RRC signalings, receiving a second signaling, and executing a first operation set according to one embodiment of the present application, as shown in FIG. 1. In FIG. 1, each block represents one step, and it should be particularly emphasized that the order of the blocks in the figure does not represent the chronological relationship between the steps represented.

In Embodiment 1, a first node in the present application receives K RRC signalings in step 101; receives the second signaling in step 102; and executes the first operation set in step 103,
wherein, each of the K RRC signalings is used for configuring at least one cell; and K is an integer greater than 1; the second signaling is used for triggering the application of one of the K RRC signalings; and any one of the K RRC signalings being unable to be successfully applied is used for triggering the execution of the first operation set, the first operation set comprising cell selection; and a first cell being a cell selected in the cell selection comprised in the first operation set, wherein whether the first operation set comprises sending first information depends on whether the first cell is configured by at least one of the K RRC signalings; only when the first cell is not configured by any of the K RRC signalings, the first operation set comprises sending the first information; and successfully applying one RRC signaling comprises applying one cell configured by the RRC signaling as a SpCell.

As one embodiment, the first node is UE (User Equipment).

As one embodiment, the first node is in an RRC connected state.

As one embodiment, any parameter in the present application is either configured by the network or may be generated by the first node according to an internal algorithm, such as randomly.

As one embodiment, the present application is for an NR.

As one embodiment, the present application is for wireless communication networks after an NR.

As one embodiment, a serving cell refers to a cell where UE resides. Executing cell search comprises UE searching for one suitable cell of a selected PLMN (Public Land Mobile Network) or SNPN (Stand-alone Non-public Network), selecting the one suitable cell to provide available services, and monitoring a control channel of the one suitable cell. This process is defined as residing on a cell; that is, one cell that is resided on is a serving cell of the UE relative to the UE. Residing on one cell in an RRC idle state or an RRC inactive state has the following benefits: it allows UE to receive system messages from the PLMN or SNPN; after registration, if UE desires to establish an RRC connection or continue one suspended RRC connection, UE may do so by executing initial access on the control channel of the cell where it resides; the network may page UE; and it allows UE to receive notifications from an ETWS (Earthquake and Tsunami Warning System) and a CMAS (Commercial Mobile Alert System).

As one embodiment, for UE in an RRC connected state not configured with CA/DC (carrier aggregation/dual connectivity), there is only one serving cell comprising a primary cell. For UE in the RRC connected state configured with CA/DC (carrier aggregation/dual connectivity), the serving cell is used for indicating a cell set comprising a Special Cell (SpCell) and all secondary cells. The primary cell is an MCG (Master Cell Group) cell, which operates on a primary frequency. and UE executes an initial connection establishment process or initiates connection reestablishment on the primary cell. For a dual connectivity operation, the special cell refers to a PCell (Primary Cell) of an MCG or a PSCell (Primary SCG Cell) of an SCG (Secondary Cell Group); and if it is not a dual connectivity operation, the special cell refers to a PCell.

As one embodiment, a frequency at which an SCell (Secondary Cell) operates is a secondary frequency.

As one embodiment, individual content of an information element is referred to as a field.

As one embodiment, MR-DC (Multi-Radio Dual Connectivity) refers to dual connectivity of E-UTRA and NR nodes, or dual connectivity between two NR nodes.

As one embodiment, in MR-DC, a radio access node that provides a control plane connection to a core network is a master node, and the master node may be a master eNB, a master ng-eNB, or a master gNB.

As one embodiment, an MCG refers to a group of serving cells associated with the master node in MR-DC, which comprises a SpCell, and may also, optionally, comprise one or more SCells.

As one embodiment, a PCell is a SpCell of an MCG.

As one embodiment, a PSCell is a SpCell of an SCG.

As one embodiment, in MR-DC, a radio access node that does not provide a control plane connection to a core network and provides additional resources to UE is a secondary node. The secondary node may be an en-gNB, a secondary ng-eNB, or a secondary gNB.

As one embodiment, in MR-DC, a group of serving cells associated with the secondary node is an SCG (secondary cell group), comprising a SpCell and, optionally, one or more SCells.

As one embodiment, the SpCell is a PCell or the SpCell is a PSCell.

As one embodiment, the names of the K RRC signalings are the same.

As one embodiment, the K RRC signalings are all generated by an RRC layer.

As one embodiment, the K RRC signalings belong to the same RRC message.

As one embodiment, the K RRC signalings belong to different RRC messages.

As one embodiment, any one of the K RRC signalings is or comprises at least part of fields of one RRC message.

As one embodiment, any one of the K RRC signalings is or comprises one field of one RRC message.

As one embodiment, content comprised in one field of the present application is one information element, and the meaning of comprising one field is comprising the one information element.

As one embodiment, content comprised in one field of the present application is a plurality of information elements, and the meaning of comprising one field is comprising the plurality of information elements.

As one embodiment, each of the K RRC signalings is an RRCReconfiguration message.

As one embodiment, each of the K RRC signalings comprises part of fields in the RRCReconfiguration message.

As one embodiment, each of the K RRC signalings only comprises part of fields in the RRCReconfiguration message.

As one embodiment, each RRCReconfiguration comprises at least one Cell GroupConfig.

As one embodiment, each of the K RRC signalings is or comprises a CellGroupConfig field or a corresponding information element.

As one embodiment, each of the K RRC signalings is CellGroupConfig for a cell group of a target SpCell.

As one embodiment, each CellGroupConfig comprises at least one SpCellConfig.

As one embodiment, the K RRC signalings comprise K CellGroupConfig fields in one RRCReconfiguration message.

As one embodiment, each of the K RRC signalings is or comprises a SpCellConfig field or a corresponding information element.

As one embodiment, the K RRC signalings is SpCellConfig for the target SpCell.

As one embodiment, each of the K RRC signalings comprises one or more SpCellConfig fields in one RRCReconfiguration message.

As one embodiment, the K RRC signalings comprise one or more SpCellConfig fields in one CellGroupConfig field.

As one embodiment, the K RRC signalings are sent to the first node by unicast.

As one embodiment, a logical channel occupied by the K RRC signalings comprises a DCCH (downlink control channel).

As one embodiment, the SpCell comprises at least one of a PCell and a PSCell.

As one embodiment, the SpCell is a PCell.

As one embodiment, the SpCell is a PSCell.

As one embodiment, the target SpCell specifically refers to a target cell in cell handover.

As one embodiment, the cell handover comprises cell switch.

As one embodiment, each of the K RRC signalings comprises a physCellId field, and the comprised physCellId field indicates a cell configured by the K RRC signalings.

As one embodiment, K is equal to 2.

As one embodiment, K is not greater than 8.

As one embodiment, K is not greater than 16.

As one embodiment, K is configurable.

As one embodiment, the K RRC signalings belong to one information element list of one RRC message.

As one embodiment, the second signaling is a control signaling of a protocol layer below an RRC layer.

As one embodiment, the second signaling is an MAC CE (control element).

As one embodiment, the second signaling is generated in an MAC layer.

As one embodiment, the second signaling is DCI (downlink control information).

As one embodiment, the second signaling does not comprise a PDU (protocol data unit) of the RRC layer.

As one embodiment, the second signaling does not comprise a PDU (protocol data unit) of an RLC layer.

As one embodiment, the second signaling comprises an index or a configuration index of one of the K RRC signalings.

As one embodiment, the second signaling comprises the index or the configuration index of at least one of the K RRC signalings.

As one embodiment, the second signaling comprises an identity of a cell configured by one of the K RRC signalings.

As one embodiment, the second signaling indicates the execution of which RRC signaling among the K RRC signalings.

As one embodiment, the second signaling indicates the execution of the one of the K RRC signalings.

As one embodiment, the execution of any one of the K RRC signalings depends on receiving the second signaling.

As one embodiment, the K RRC signalings are stored first instead of being executed immediately after being received.

As one embodiment, the first operation set is executed only when any one of the K RRC signalings is unable to be successfully applied.

As one embodiment, the application of any one of the K RRC signalings depends on the second signaling.

As one embodiment, the application of at least one of the K RRC signalings depends on the second signaling.

As one embodiment, the application of one of the K RRC signalings depends on the second signaling.

As one embodiment, applying one of the K RRC signalings is to execute one of the K RRC signalings.

As one embodiment, applying the earliest applied RRC signaling among the K RRC signalings depends on the second signaling.

As one embodiment, applying RRC signalings other than the earliest applied RRC signaling among the K RRC signalings depends on any one of the K RRC signalings being unable to be successfully applied.

As one embodiment, whether the first operation set comprises applying an RRC signaling for configuring the first cell among the K RRC signalings depends on whether the first cell is configured by at least one of the K RRC signalings.

As one embodiment, when whether the first cell is configured by at least one of the K RRC signalings, the first operation set comprises applying an RRC signaling for configuring the first cell among the K RRC signalings.

As one embodiment, a meaning of the action of executing the first operation set is: executing each operation in the first operation set.

As one embodiment, a meaning of a sentence "in response to any one of the K RRC signalings being unable to be successfully applied, executing a first operation set" comprises: any one of the K RRC signalings being unable to be successfully applied leads to the execution of the first operation set.

As one embodiment, the meaning of the sentence "in response to any one of the K RRC signalings being unable to be successfully applied, executing a first operation set" comprises: when any one of the K RRC signalings is unable to be successfully applied, the first operation set is executed; and when any one of the K RRC signalings is successfully applied, the first operation set is not executed.

As one embodiment, the meaning of the sentence "in response to any one of the K RRC signalings being unable to be successfully applied, executing a first operation set" comprises: once any one of the K RRC signalings is unable to be successfully applied, the first operation set must be executed; and when any one of the K RRC signalings is successfully applied, the first operation set is not executed.

As one embodiment, any one of the K RRC signalings being unable to be successfully applied comprises the one of the K RRC signalings being unable to be successfully applied.

As one embodiment, the first operation set is executed after receiving the second signaling.

As one embodiment, the first operation set is executed after applying the one of the K RRC signalings.

As one embodiment, the cell selection comprises selecting one suitable cell.

As one embodiment, the cell selection comprises selecting one cell that meets certain quality requirements.

As one embodiment, the cell selection comprises selecting one cell that meets a first quality requirement.

As one embodiment, the cell selection comprises selecting one target cell.

As one sub-embodiment of this embodiment, the cell is a target cell for cell handover.

As one sub-embodiment of this embodiment, the cell is the target cell for cell switch.

As one embodiment, the cell selection comprises selecting one candidate cell for handover.

As one embodiment, the result of the cell selection is that the first cell is selected.

As one embodiment, the cell selection comprises selecting the first cell.

As one embodiment, a cell selected in the cell selection is the first cell.

As one embodiment, the K RRC signalings indicate the first cell.

As one embodiment, the first cell is a candidate cell for cell handover or cell switch.

As one embodiment, the first cell is a target cell for cell handover or cell switch.

As one embodiment, a meaning of a sentence "whether the first operation set comprises sending first information depends on whether the first cell is configured by at least one of the K RRC signalings" is: only when the first cell is not configured by any of the K RRC signalings, the first operation set comprises sending the first information.

As one embodiment, a meaning of a sentence "only when the first cell is not configured by any of the K RRC signalings, the first operation set comprises sending the first information" is: when the first cell is not configured by at least one of the K RRC signalings, the first operation set comprises sending the first information; and when the first cell is configured by at least one of the K RRC signalings, the first operation set does not comprise sending the first information.

As one embodiment, a meaning of a phrase "not configured by at least one of the K RRC signalings" comprises: not belonging to a target cell for cell switch.

As one embodiment, the benefits of the above method comprises: cell handover may be performed quickly, especially when one handover attempt is unsuccessful, continuous handover attempts are performed; and at the same time, it is beneficial to reduce uplink auxiliary information and save network resources.

As one embodiment, the meaning of the phrase "not configured by at least one of the K RRC signalings" comprises: only supporting L3-based handover for the handover of the first cell.

As one embodiment, whether the first operation set comprises RRC reestabilshment depends on whether the first cell is configured by at least one of the K RRC signalings.

As one sub-embodiment of this embodiment, when the first cell is configured by at least one of the K RRC signalings, the first operation set does not comprise RRC reestabilshment; and when the first cell is not configured by any of the K RRC signalings, the first operation set comprises RRC reestabilshment.

As one embodiment, when the first cell is configured by at least one of the K RRC signalings, the cell switch is not considered to have failed; and when the first cell is not configured by any of the K RRC signalings, the cell switch is considered to have failed.

As one embodiment, when the first cell is configured by at least one of the K RRC signalings, the first operation set does not comprise MAC reset; and when the first cell is not configured by any of the K RRC signalings, the first operation set comprises MAC reset.

As one embodiment, the first information is used for indicating a cell handover or cell switch failure.

As one embodiment, the first information is used for indicating an LTM (L1L2 mobility) failure.

As one embodiment, the first information is used for indicating a Reconfiguration WithSync failure.

As one embodiment, the first information is used for indicating that the K RRC signalings are unable to be successfully applied.

As one embodiment, the first information is used for indicating that any one of the K RRC signalings is unable to be successfully applied.

As one embodiment, the first information is used for indicating an RRC signaling failure.

As one embodiment, the first information is used for indicating a failure of the second signaling.

As one embodiment, the first information comprises one RRC message.

As one embodiment, the first information comprises one report.

As one embodiment, the first information comprises one report related to a failure.

As one embodiment, the first information is generated by one state variable.

As one embodiment, the first information is transmitted through an SRB.

As one embodiment, the first information is an MAC CE.

As one embodiment, a meaning of a sentence "successfully applying one RRC signaling comprises applying one cell configured by the RRC signaling as a SpCell" comprises: the first cell is a target cell; and successfully applying one RRC signaling means applying one cell belonging to an MCG that is configured by the RRC signaling as a PCell, and/or applying one cell belonging to an SCG that is configured by the RRC signaling as a PSCell.

As one embodiment, the meaning of the sentence "successfully applying one RRC signaling comprises applying one cell configured by the RRC signaling as a SpCell" comprises: synchronizing with the one cell configured by the RRC signaling.

As one embodiment, the meaning of the sentence "successfully applying one RRC signaling comprises applying one cell configured by the RRC signaling as a SpCell" comprises: initiating random access for the one cell configured by the RRC signaling.

As one embodiment, the meaning of "successfully applying one RRC signaling comprises applying one cell configured by the RRC signaling as a SpCell" comprises: executing spCellConfigDedicated configured by and comprised in the RRC signaling.

As one embodiment, the meaning of the sentence "successfully applying one RRC signaling comprises applying one cell configured by the RRC signaling as a SpCell" comprises: the RRC signaling comprises physCellId, the physCellId indicates one cell, and successfully applying the one RRC signaling considers that a SpCell is one cell indicated by the physCellId.

As one embodiment, the meaning of the sentence "successfully applying one RRC signaling comprises applying one cell configured by the RRC signaling as a SpCell" comprises: applying a BCCH (broadcast control channel) configuration of the one cell configured by the RRC signaling.

As one embodiment, the meaning of the sentence "successfully applying one RRC signaling comprises applying one cell configured by the RRC signaling as a SpCell" comprises: when an RRC signaling used for configuring the first cell among the K RRC signalings is successfully applied, the first cell is applied as/considered to be a SpCell of the first node.

As one sub-embodiment of this embodiment, when an RRC signaling used for configuring the first cell among the K RRC signalings is for an MCG, the first cell is considered to be a PCell; and when an RRC signaling used for configuring the first cell among the K RRC signalings is for an SCG, the first cell is considered to be a PSCell.

As one embodiment, the meaning of the sentence "successfully applying one RRC signaling comprises applying one cell configured by the RRC signaling as a SpCell" comprises: obtaining an MIB (master information block) of the one cell configured by applying the RRC signaling.

As one embodiment, a meaning of a sentence "whether the first operation set comprises sending first information depends on whether the first cell is configured by at least one of the K RRC signalings" comprises: whether the first operation set comprises sending the first information depends on whether the first cell is configured by one of the K RRC signalings.

As one embodiment, the cell selection comprised in the first operation set comprises: preferentially selecting a cell configured by the K RRC signalings, and after one cell configured by the K RRC signalings is selected, applying an RRC signaling among the K RRC signalings that is used for configuring the one cell.

As one embodiment, a meaning of a sentence "preferentially selecting a cell configured by the K RRC signalings" comprises: when there is a cell that has not been selected among cells configured by the K RRC signalings, selecting a cell among cells configured by the K RRC signalings.

As one embodiment, the meaning of the sentence "preferring selecting a cell configured by the K RRC signalings" comprises: under the condition of equal cell quality, selecting a cell configured by the K RRC signalings instead of selecting a cell other than the cell configured by the K RRC signalings.

As one embodiment, the meaning of the sentence "preferentially selecting a cell configured by the K RRC signalings" comprises: relative to a cell other than a cell configured by the K RRC signalings, the cell configured by the K RRC signalings has a higher priority.

As one embodiment, the meaning of the sentence "preferentially selecting a cell configured by the K RRC signalings" comprises: as long as certain quality requirements are met, even if the quality of a cell configured by the K RRC signalings is not the best relative to a cell other than the cell configured by the K RRC signalings, still selecting the cell configured by the K RRC signalings.

As one embodiment, the first operation set comprises applying an RRC signaling among the K RRC signalings that is used for configuring the one cell.

As one embodiment, the cell selection comprised in the first operation set comprises: before successfully applying one of the K RRC signalings, at most N cell selections are executed in a cell configured by the K RRC signalings, N being a positive integer not greater than K.

As one embodiment, N is less than K.

As one embodiment, executing N cell selections means successively selecting N cells configured by the K RRC signalings.

As one embodiment, executing N cell selections means successively selecting not more than N cells configured by the K RRC signalings.

As one embodiment, N is equal to K.

As one embodiment, the second signaling is used for indicating N.

As one embodiment, N is equal to the number of configuration indexes comprised in the second signaling.

As one embodiment, when any cell configured by the K RRC signalings is selected in cell selection, the any cell configured by the K RRC signalings will not participate in subsequent cell selection.

As one embodiment, when any cell configured by the K RRC signalings is selected in cell selection, before one of the K RRC signalings is successfully applied, the any cell configured by the K RRC signalings will not participate in subsequent cell selection.

As one embodiment, when any cell configured by the K RRC signalings is selected in cell selection, the any cell configured by the K RRC signalings will not participate in subsequent cell selection associated with the K RRC signalings.

As one embodiment, when any cell configured by the K RRC signalings is selected in cell selection, in subsequent cell selection, even if the any cell configured by the K RRC signalings is still selected, an RRC signaling used for configuring the any cell among the K RRC signalings will not be executed.

As one embodiment, when any cell configured by the K RRC signalings is selected in cell selection, an RRC signaling used for configuring the any cell among the K RRC signalings is deleted.

As one embodiment, a meaning of a phrase "applying an RRC signaling among the K RRC signalings that is used for configuring the one cell" is: applying one RRC signaling used for configuring the one cell among the K RRC signalings.

As one embodiment, a meaning of a phrase "any one of the K RRC signalings being unable to be successfully applied" comprises: a first timer expires; and the first timer is started with the application of any one of the K RRC signalings.

As one sub-embodiment of this embodiment, the first timer is T304.

As one sub-embodiment of this embodiment, the first timer is T304a.

As one sub-embodiment of this embodiment, the first timer is T304b.

As one sub-embodiment of this embodiment, when any one of the K RRC signalings is applied, the first timer is started.

As one sub-embodiment of this embodiment, a stopping condition of the first timer comprises: random access to a cell configured for applying the any one of the K RRC signalings is successfully completed.

As one sub-embodiment of this embodiment, the any one of the K RRC signalings is used for configuring the first timer.

As one sub-embodiment of this embodiment, the stopping condition of the first timer comprises: any one of the K RRC signalings is successfully applied.

As one embodiment, the meaning of applying any one of the K RRC signalings is to execute any one of the K RRC signalings.

As one embodiment, a meaning of a phrase "any one of the K RRC signalings being unable to be successfully applied" comprises: N cell selections are executed in a cell configured by the K RRC signalings before successfully applying one of the K RRC signalings.

As one embodiment, the meaning of the phrase "any one of the K RRC signalings being unable to be successfully applied" comprises: before successfully applying one of the K RRC signalings, N cell selections are continuously executed in a cell configured by the K RRC signalings.

As one embodiment, the meaning of the phrase "any one of the K RRC signalings being unable to be successfully applied" comprises: before successfully applying one of the K RRC signalings, N attempts are made to apply an RRC signaling among the K RRC signalings.

As one embodiment, the meaning of the phrase "any one of the K RRC signalings being unable to be successfully applied" comprises: before successfully applying one of the K RRC signalings, continuous N attempts are made to apply an RRC signaling among the K RRC signalings.

As one embodiment, the meaning of the phrase "any one of the K RRC signalings being unable to be successfully applied" comprises: after N attempts in the K RRC signalings, none of the K RRC signalings have been successfully applied.

As one embodiment, the meaning of the phrase "any one of the K RRC signalings being unable to be successfully applied" comprises: N attempts to apply an RRC signaling among the K RRC signalings are all unsuccessful.

As one embodiment, N is greater than 1.

As one embodiment, N is equal to 1.

As one embodiment, the meaning of the phrase "any one of the K RRC signalings being unable to be successfully applied" comprises: after receiving the second signaling, N attempts to apply an RRC signaling among the K RRC signalings are all unsuccessful.

As one embodiment, the application of an RRC signaling for configuring a cell selected in the N cell selections among the K RRC signalings is unsuccessful.

As one embodiment, the meaning of the phrase "any one of the K RRC signalings being unable to be successfully applied" comprises: the quality of a cell configured by the any one of the K RRC signalings fails to meet the first quality requirement.

As one embodiment, the first quality requirement comprises that a Layer 3-based measurement result is worse than a first threshold.

As one embodiment, the K RRC signalings are used for configuring the first threshold.

As one embodiment, the first threshold is fixed.

As one embodiment, the first threshold is determined by an internal algorithm of the first node.

As one embodiment, the first quality requirement is an S criterion.

As one embodiment, the K RRC signalings are used for configuring the first quality requirement.

As one embodiment, an RRC message comprising the K RRC signalings is used for configuring the first quality requirement.

As one embodiment, the first quality requirement is that RSRP (Reference Signal Receiving Power) of a cell configured by the any one of the K RRC signalings is lower than the first threshold.

As one sub-embodiment of this embodiment, the RSRP is the RSRP processed based on an L3 filter.

As one embodiment, the meaning of the phrase "any one of the K RRC signalings being unable to be successfully applied" comprises: a measurement result of a cell configured by the any one of the K RRC signalings fails to meet the first quality requirement.

As one embodiment, the meaning of the phrase "any one of the K RRC signalings being unable to be successfully applied" comprises: the measurement result of the cell configured by the any one of the K RRC signalings fails to meet the first quality requirement within one time window.

As one embodiment, the one time window is configured by the any one of the K RRC signalings.

As one embodiment, an identity of the first cell is a first cell identity; and the first cell identity is configured for the target SpCell.

As one embodiment, a meaning of a phrase "the first cell identity is configured for a target SpCell" comprises: the target SpCell is a cell indicated by the first cell identity searched on a specific time-frequency resource.

As one embodiment, the meaning of the phrase "the first cell identity is configured for a target SpCell" comprises: when the K RRC signalings indicate downlink frequency information, the target SpCell is a cell indicated by the first cell identity on an SSB (synchronization signal block) frequency indicated by the downlink frequency information. frequency indicated by the downlink frequency information.

As one embodiment, the meaning of the phrase "the first cell identity is configured for a target SpCell" comprises: when the K RRC signalings do not indicate downlink frequency information, the target SpCell is a cell indicated by the first cell identity on an SSB (Synchronization Signal Block) frequency of a source cell of the first node.

As one embodiment, the meaning of the phrase "the first cell identity is configured for a target SpCell" comprises: a cell determined by the first cell identity is the target SpCell.

As one embodiment, the target SpCell corresponds to a source cell or a source SpCell.

As one embodiment, the source cell or the source SpCell is a cell where the first node receives the K RRC signalings.

As one embodiment, the source cell or the source SpCell is a cell before handover of the first node.

As one embodiment, the first cell identity is or comprises a cell index.

As one embodiment, the first cell identity is or comprises an NCGI (NR Cell Global Identity).

As one embodiment, after the execution of a signaling for configuring the first cell among the K RRC signalings is completed, the target SpCell becomes a SpCell of the first node.

As one embodiment, the execution of each of the K RRC signalings depends on the second signaling.

As one embodiment, the execution of one of the K RRC signalings depends on the second signaling.

As one embodiment, the execution of a first RRC signaling of the K RRC signalings after receiving the second signaling depends on the second signaling.

As one embodiment, the execution of an RRC signaling other than a first RRC signaling executed among the K RRC signalings after receiving the second signaling depends on an RRC signaling among the K RRC signalings being unable to be successfully applied.

As one embodiment, when a second timer is not running, the execution of the K RRC signalings depends on the second signaling.

As one embodiment, at least when the second timer is not running, the execution of the K RRC signalings depends on the second signaling.

As one embodiment, when RRC connection reestablishment is not initiated, the execution of the K RRC signalings depends on the second signaling.

As one embodiment, when there is no ongoing RRC connection reestablishment process, the execution of the K RRC signalings depends on the second signaling.

As one embodiment, the K RRC signalings are not automatically executed after receiving.

As one embodiment, the K RRC signalings are not immediately executed after receiving.

As one embodiment, the execution of each of the K RRC signalings needs to be triggered.

As one embodiment, a condition for triggering the execution of any one of the K RRC signalings comprises: receiving the second signaling.

As one embodiment, the condition for triggering the execution of any one of the K RRC signalings comprises: when the second timer is not running, the second signaling is received.

As one embodiment, the condition for triggering the execution of any one of the K RRC signalings comprises: when the second timer is running, the second signaling is received.

As one embodiment, the condition for triggering the execution of any one of the K RRC signalings comprises: a cell selected in RRC connection reestablishment is the target SpCell.

As one embodiment, the condition for triggering the execution of any one of the K RRC signalings comprises: a cell selected when the second timer is running is the target SpCell.

As one embodiment, when the second timer is running, the second signaling triggers one of the K RRC signalings.

As one embodiment, when the second timer is running, and when a selected cell is the target SpCell, one of the K RRC signalings is executed.

As one embodiment, when the second timer is running, and when the selected cell is not the target SpCell, the K RRC signalings are not executed.

As one embodiment, when an RRC reestablishment process is initiated, and when the selected cell is the target SpCell, the K RRC signalings are executed.

As one embodiment, when the RRC reestablishment process is initiated, and when the selected cell is not the target SpCell, the K RRC signalings are not executed.

As one embodiment, when there is the ongoing RRC reestablishment process, and when the selected cell is not the target SpCell, the K RRC signalings are not executed.

As one embodiment, each of the K RRC signalings comprises at least a first field.

As one embodiment, the first field of each of the K RRC signalings configures a cell identity of the target SpCell.

As one embodiment, the first field of each of the K RRC signalings comprises the first cell identity.

As one embodiment, the first field of each of the K RRC signalings configures downlink frequency information of the target SpCell.

As one embodiment, the first field of each of the K RRC signalings configures uplink access information of the target SpCell.

As one embodiment, the first field of each of the K RRC signalings configures uplink resources of the target SpCell.

As one embodiment, the first field of each of the K RRC signalings configures a BWP (bandwidth part) of the target SpCell.

As one embodiment, the first field of each of the K RRC signalings configures the power of the target SpCell.

As one embodiment, the first field of each of the K RRC signalings configures timing advance of the target SpCell.

As one embodiment, the first field of each of the K RRC signalings configures a reference signal of the target SpCell.

As one embodiment, the first field of each of the K RRC signalings configures a control channel of the target SpCell.

As one embodiment, the first field of each of the K RRC signalings configures spatial parameters of the target SpCell.

As one embodiment, the second signaling explicitly indicates whether to execute the K RRC signalings.

As one embodiment, the second signaling explicitly indicates which one or which ones of the K RRC signalings are to be executed.

As one embodiment, the second signaling comprises one configuration identity or configuration index of the K RRC signalings.

As one embodiment, when the second signaling comprises one configuration identity or configuration index of the K RRC signalings, the execution of one of the K RRC signalings is triggered.

As one embodiment, the second signaling indicates the target SpCell.

As one embodiment, when the second signaling indicates the target SpCell, one of the K RRC signalings is executed.

As one embodiment, the second signaling indicates resources or reference signals of the target SpCell.

As one embodiment, when the second signaling indicates resources or reference signals of the target SpCell, the execution of one of the K RRC signalings is triggered.

As one embodiment, before receiving the second signaling, the first node sends a first signal.

As one embodiment, the first signal is sent after receiving the K RRC signalings.

As one embodiment, the second signaling is received after sending the first signal.

As one embodiment, the first signal is used for triggering the second signaling.

As one embodiment, the first signal comprises the measurement result.

As one embodiment, the first signal comprises the measurement result of an L1.

As one embodiment, the first signal comprises L1-RSRP.

As one embodiment, the first signal comprises one identity or index.

As one sub-embodiment of this embodiment, the one identity or index is associated with one of the K RRC signalings.

As one sub-embodiment of this embodiment, the one identity or index is associated with the target SpCell.

As one embodiment, the RRC connection reestablishment comprises sending an RRCReestablishmentRequest message.

As one embodiment, the RRC connection reestablishment comprises suspending an SRB1.

As one embodiment, the RRC connection reestablishment comprises suspending an SRB0 and all RBs other than an MRB (MBS radio bearer) for broadcast.

As one embodiment, the RRC connection reestablishment comprises suspending a current service.

As one embodiment, the RRC connection reestablishment comprises releasing an SCG or a SCell.

As one embodiment, the RRC connection reestablishment comprises resetting an MAC.

As one embodiment, the RRC connection reestablishment comprises starting a T311 timer.

As one embodiment, the RRC connection reestablishment comprises releasing spCellConfig.

As one embodiment, the RRC connection reestablishment comprises releasing or deleting at least one of the K RRC signalings.

As one embodiment, the RRC connection reestablishment comprises cell selection.

As one embodiment, initiating RRC connection reestablishment is for reestablishing an RRC connection.

As one embodiment, a reason for initiating RRC connection reestablishment comprises: detecting that a T316 timer expires.

As one embodiment, the reason for initiating RRC connection reestablishment comprises: detecting that a radio link failure occurs in an MCG and T316 is not configured.

As one embodiment, the reason for initiating RRC connection reestabilshment comprises: failure of re-configuration with sync of an MCG.

As one embodiment, the reason for initiating RRC connection reestabilshment comprises: a lower layer indicates failure of an integrity protection verification of an SRB1 (signaling radio bearer 1) or an SRB2.

As one embodiment, entering an RRC idle state means losing an RRC connection with an access network.

As one embodiment, communication with a serving cell requires leaving the RRC idle state.

As one embodiment, communication with the serving cell requires the RRC connection.

As one embodiment, a logical channel occupied by the K RRC signalings comprises a DCCH (dedicated control channel).

As one embodiment, the K RRC signalings use encryption.

As one embodiment, the K RRC signalings use integrity protection.

As one embodiment, the second signaling uses encryption.

As one embodiment, the second signaling uses integrity protection.

As one embodiment, the second signaling does not use encryption.

As one embodiment, the second signaling does not use integrity protection.

As one embodiment, the second signaling is for the first node.

As one embodiment, the second signaling is only for the first node.

As one embodiment, a physical channel occupied by the second signaling comprises a PDCCH (physical downlink control channel).

As one embodiment, the physical channel occupied by the second signaling comprises a PDSCH (physical downlink shared channel).

As one embodiment, a meaning of "executing one of the K RRC signalings" is: executing part of fields comprised in one of the K RRC signalings.

As one embodiment, the meaning of "executing one of the K RRC signalings" is: executing all fields comprised in one of the K RRC signalings.

As one embodiment, the meaning of "executing one of the K RRC signalings" is: executing all information elements comprised in one of the K RRC signalings.

As one embodiment, the meaning of "executing one of the K RRC signalings" is: executing all fields, sub-fields, and so on comprised in one of the K RRC signalings.

As one embodiment, the meaning of "executing one of the K RRC signalings" is: executing one of the K RRC signalings comprises at least executing reconfiguration With Sync comprised in one of the K RRC signalings.

As one embodiment, the meaning of "executing one of the K RRC signalings" is: executing one of the K RRC signalings comprises at least executing the first field comprised in one of the K RRC signalings.

As one embodiment, a higher layer comprises an RRC layer.

As one embodiment, the lower layer comprises an MAC layer.

As one embodiment, the lower layer comprises a physical layer.

As one embodiment, the lower layer comprises a protocol layer below the RRC layer.

As one embodiment, the first field comprised in the K RRC signalings comprises reconfiguration WithSync.

As one embodiment, the K RRC signalings do not comprise reconfigurationWithSync.

As one embodiment, the execution of the K RRC signalings comprises using a new C-RNTI.

As one embodiment, the new C-RNTI is an identity indicated by a newUE-Identity field.

As one embodiment, the first information comprises an L1-based measurement result and an L3-based measurement result.

As one embodiment, the L1-based measurement result comprises L1-RSRP.

As one embodiment, the L3-based measurement result comprises RSRP.

As one embodiment, the L1-based measurement result comprises a measurement result carried by the first signal.

As one embodiment, the L3-based measurement result comprises current RSRP.

As one embodiment, the L3-based measurement result comprises RSRP when any one of the K RRC signalings is unable to be successfully applied.

As one embodiment, the measurement result of an L1 generally refers to the measurement result of the physical layer.

As one embodiment, the measurement result of the L1 generally refers to the measurement result using an L1 filter.

As one embodiment, the measurement result of the L1 generally refers to the measurement result of the RRC layer, or the measurement result sent through the RRC message.

As one embodiment, the first information is used for indicating a reason for cell switch failure.

As one sub-embodiment of this embodiment, the reason for cell switch failure comprises random access failure.

As one sub-embodiment of this embodiment, the reason for cell switch failure comprises timer expiration.

As one sub-embodiment of this embodiment, the reason for cell switch failure comprises failure to meet the first quality requirement.

As one sub-embodiment of this embodiment, the reason for cell switch failure comprises reaching or exceeding the maximum number of attempts.

As one sub-embodiment of this embodiment, the maximum number of attempts is the maximum number of attempts to apply any one of the K RRC signalings.

As one embodiment, the first information is used for indicating the first cell.

As one embodiment, the first information comprises an identity of the first cell.

As one embodiment, the first information indicates that the first cell is the target cell.

As one embodiment, the first cell is not a sender of the K RRC signalings.

### Embodiment 2

Embodiment 2 illustrates a schematic diagram of one network architecture according to the present application, as shown in FIG. 2.

FIG. 2 illustrates a network architecture 200 of 5G NR, LTE (Long-Term Evolution) and LTE-A (Long-Term Evolution Advanced) systems. The 5G NR or LTE network architecture 200 may be referred to as a 5GS (5G System)/EPS (Evolved Packet System) 200 or some other suitable terminologies. The 5GS/EPS 200 may comprise one or more pieces of UE (User Equipment)201, an NG-RAN (Next Generation Radio Access Network)202, a 5GC (5G Core Network)/EPC (Evolved Packet Core)210, an HSS (Home Subscriber Server)/UDM (Unified Data Management)220, and an Internet service 230. The 5GS/EPS The 5GS/EPS may be interconnected with other access networks, but these entities/interfaces are not shown for simplicity. As shown in figures, the 5GS/EPS provides packet switching services, but those skilled in the art will readily appreciate that the various concepts presented throughout the present application may be extended to networks that provide circuit switching services or other cellular networks. The NG-RAN comprises an NR Node B (gNB) 203 and other gNBs 204. The gNB203 provides user and control plane protocol terminations toward the UE201. The gNB203 may be connected to other gNBs 204 via an Xn interface (e.g., backhaul). The gNB203 may also be referred to as a base station, a base transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the 5GC/EPC210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similar functional apparatuses. A person skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the 5GC/EPC2105GC/EPC210 via an S1/NGS1/NG interface. The 5GC/EPC210 comprises an MME (Mobility Management Entity)/AMF (Authentication Management Field)/SMF (Session Management Function) 211, other MMEs/AMFs/SMFs 214, an S-GW (Service Gateway)/UPF) (User Plane Function) 212, and a P-GW (Packet Data Network Gateway)/UPF213. The MME/AMF/SMF211 is a control node that processes a signaling between the UE201 and the 5GC/EPC210. Generally, the MME/AMF/SMF211 provides bearer and connection management. All user IP (Internet Protocol) packets are transmitted through the S-GW/UPF212, which is itself connected to the P-GW/UPF213. The P-GW provides UE IP address allocation and other functions. The P-GW/UPF213 is connected to the Internet service 230. The Internet service 230 comprises Internet protocol services corresponding to operators, which may specifically comprise the Internet, an intranet, an IMS (IP Multimedia Subsystem), and a packet switching streaming service.

As one embodiment, a first node in the present application is the UE201.

As one embodiment, a base station of a second node in the present application is the gNB203.

As one embodiment, a radio link from the UE201 to the NR Node B is an uplink.

As one embodiment, the radio link from the NR Node B to the UE201 is a downlink.

As one embodiment, the UE201 supports relay transmission.

As one embodiment, the UE201 comprises a mobile phone.

As one embodiment, the UE201 is a means of transportation comprising an automobile.

As one embodiment, the gNB203 is a MacroCellular base station.

As one embodiment, the gNB203 is a Micro Cell base station.

As one embodiment, the gNB203 is a Pico Cell base station.

As one embodiment, the gNB203 is one flying platform device.

As one embodiment, the gNB203 is a satellite device.

### Embodiment 3

Embodiment 3 shows a schematic diagram of an embodiment of one radio protocol architecture for a user plane and a control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for the control plane 300 between a first node (UE, a gNB, or a satellite or aircraft in an NTN) and a second node (a gNB, UE, or a satellite or aircraft in an NTN), or between two pieces of UE using three layers: a Layer 1, a Layer 2, and a Layer 3. The Layer 1 (L1 layer) is the lowest layer and implements various PHY (Physical Layer) signal processing functions. The L1 layer will be referred to as a PHY301 herein. The Layer 2 (L2 layer) 305 is above the PHY301 and is responsible for links between the first node and the second node and between two pieces of UE through the PHY301. The L2 layer 305 comprises an MAC (Medium Access Control) sublayer 302, an RLC (Radio Link Control) sublayer 303, and a PDCP (Packet Data Convergence Protocol) sublayer 304, which terminate at the second node. The PDCP sublayer 304 provides multiplexing between different radio bearers and logical channels. The PDCP sublayer 304 also provides security by encrypting data packets, and provides inter-cell mobility support of the first node between second nodes. The RLC sublayer 303 provides segmentation and reassembly of upper-layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between first nodes. The MAC sublayer 302 is also responsible for HARQ operations. An RRC (Radio Resource Control) sublayer 306 in the Layer 3 (L3 Layer) in the control plane 300 is responsible for obtaining radio resources (i.e., radio bearers) and configuring lower layers using an RRC signaling between the second node and the first node. A PC5-S (PC5 Signaling Protocol) sublayer 307 is responsible for processing signaling protocols of a PC5 interface. The radio protocol architecture for the user plane 350 comprises the Layer 1 (L1 layer) and the Layer 2 (L2 layer). The radio protocol architecture for the first node and the second node in the user plane 350 is substantially the same as the corresponding layers and sublayers in the control plane 300 as for a physical layer 351, a PDCP sublayer 354 in an L2 layer 355, an RLC sublayer 353 in the L2 layer 355, and an MAC sublayer 352 in the L2 layer 355, but the PDCP sublayer 354 also provides header compression for upper layer data packets to reduce the radio transmission overhead. The L2 layer 355 in the user plane 350 also comprises an SDAP (Service Data Adaptation Protocol) sublayer 356, and the SDAP sublayer 356 is responsible for mapping between a QoS flow and a data radio bearer (DRB) to support the diversity of services. An SRB may be regarded as a service or an interface provided by a PDCP layer to a higher layer, such as an RRC layer. In an NR system, SRBs comprise an SRB1, an SRB2, and an SRB3, and an SRB4 when it comes to secondary link communication, which are used for transmitting different types of control signalings. SRBs are bearers between UE and an access network, and are used for transmitting control signalings comprising RRC signalings between the UE and the access network. The SRB1 has special significance for UE. After each UE establishes an RRC connection, there will be the SRB1 for transmitting the RRC signaling. Most of the signalings are transmitted through the SRB1. If the SRB1 is interrupted or unavailable, UE must perform RRC reestablishment. The SRB2 is generally only used for transmitting NAS signalings or signalings related to security. UE may not be configured with the SRB3. Except for emergency services, UE must establish the RRC connection with a network for subsequent communication. Although not shown, the first node may have several upper layers above the Layer L2 355. In addition, it also comprises a network layer (e.g., IP layer) terminated at P-GW on the network side and an application layer terminated at the other terminal of the connection (e.g., remote UE, and servers). For UE related to relay services, its control plane may also comprise an adaptation sublayer SRAP (Sidelink Relay Adaptation Protocol) 308, and its user plane may also comprise an adaptation sublayer SRAP358. The introduction of an adaptation layer helps lower layers, such as an MAC layer, such as an RLC layer, to multiplex and/or distinguish data from a plurality of source UE. For nodes not related to relay communication, PC5-S307, SRAP308, and SRAP358 are not required in a communication process.

As one embodiment, the radio protocol architecture in FIG. 3 is applicable to the first node in the present application.

As one embodiment, the radio protocol architecture in FIG. 3 is applicable to the second node in the present application.

As one embodiment, K RRC signalings in the present application is generated in an RRC306.

As one embodiment, first information in the present application is generated in the RRC306 or an MAC302.

As one embodiment, a second signaling in the present application is generated in the MAC302 or the PHY301.

As one embodiment, a first signal in the present application is generated in the MAC302 or the PHY301.

### Embodiment 4

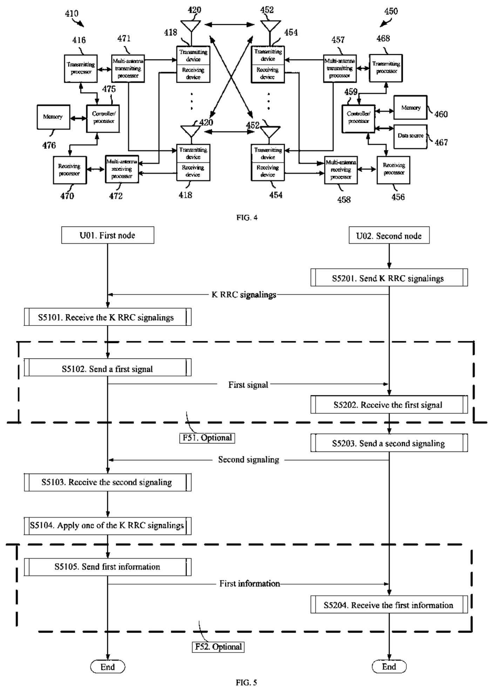

Embodiment 4 shows a schematic diagram of a first communication device and a second communication device according to one embodiment of the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, and optionally may also comprise a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, and optionally may also comprise a multi-antenna receiving processor 472, a multi-antenna transmitting processor 471, a transmitting device/receiving device 418 and an antenna 420.

In transmission from the second communication device 410 to the first communication device 450, at the second communication device 410, upper-layer data packets from a core network are provided to the controller/processor 475. The controller/processor 475 implements the functionality of an L2 layer (Layer-2). In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signalings to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on coded and modulated symbols to generate one or more spatial streams. The transmitting processor 416 then maps each spatial stream to a subcarrier, multiplexes the each spatial stream with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, and then provides the radio frequency stream to different antennas 420.

In the transmission from the second communication device 410 to the first communication device 450, at the first communication device 450, each receiving device 454 receives a signal through a corresponding antenna 452 thereof. Each receiving device 454 recovers information modulated onto a radio frequency carrier, and converts the radio frequency stream into a baseband multi-carrier symbol stream and provides the baseband multi-carrier symbol stream to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses the fast Fourier transform (FFT) to convert the baseband multi-carrier symbol stream from the time domain to the frequency domain after the receiving analog precoding/beamforming operation. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the first communication device 450. The symbols on each spatial stream are demodulated and recovered in the receiving processor 456, and soft decisions are generated. The receiving processor 456 then decodes and deinterleaves the soft decisions to recover upper-layer data and control signals transmitted by the second communication device 410 on the physical channel. The upper-layer data and the control signals are then provided to the controller/processor 459. The controller/processor 459 implements the functions of the L2 layer. The controller/processor 459 may be associated with the memory 460 which stores program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packets from the core network. The upper-layer data packets are then provided to all protocol layers above the L2 layer. Various control signals may also be provided to an L3 for L3 processing.

In transmission from the first communication device 450 to the second communication device 410, at the first communication device 450, the upper-layer data packets are provided to the controller/processor 459 using the data source 467. The data source 467 represents all protocol layers above the L2 layer. Similar to the transmission function at the second communication device 410 described in the transmission from the second communication device 410 to the first communication device 450, the controller/processor 459 implements header compression, encryption, packet segmentation and reordering, and multiplexing between logical and transport channels based on radio resource allocation, and implements L2 layer functions for the user plane and the control plane. The controller/processor 459 is also responsible for retransmission of lost packets and signalings to the second communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the produced spatial stream into a multi-carrier/single-carrier symbol stream, which is provided to different antennas 452 by the transmitting device 454 after analog precoding/beamforming operations in the multi-antenna transmitting processor 457. Each transmitting device 454 first converts the baseband symbol stream provided by the multi-antenna transmitting processor 457 into a radio frequency symbol stream, and then provides the radio frequency symbol stream to the antenna 452.

In the transmission from the first communication device 450 to the second communication device 410, the functions at the second communication device 410 are similar to the receiving functions at the first communication device 450 described in the transmission from the second communication device 410 to the first communication device 450. Each receiving device 418 receives a radio-frequency signal through a corresponding antenna 420 thereof, converts the received radio-frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with the memory 476 which stores program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover the upper-layer data packets from the UE450. The upper-layer data packets from the controller/processor 475 may be provided to the core network.

As one embodiment, the first communication device 450 apparatus comprises: at least one processor and at least one memory, wherein the at least one memory comprises a computer program code; and the at least one memory and the computer program code are configured to be used together with the at least one processor, and the first communication device 450 apparatus at least: receives K RRC signalings, each of the K RRC signalings being used for configuring at least one cell; and K being an integer greater than 1; receives a second signaling, the second signaling being used for triggering the application of one of the K RRC signalings; and in response to any one of the K RRC signalings being unable to be successfully applied, executes a first operation set, the first operation set comprising cell selection; and a first cell being a cell selected in the cell selection comprised in the first operation set, wherein, whether the first operation set comprises sending first information depends on whether the first cell is configured by at least one of the K RRC signalings; only when the first cell is not configured by any of the K RRC signalings, the first operation set comprises sending the first information; and successfully applying one RRC signaling comprises applying one cell configured by the RRC signaling as a SpCell.

As one embodiment, the first communication device 450 comprises: a memory storing a computer-readable instruction program, the computer-readable instruction program generates actions when executed by at least one processor, the action comprising: receiving the K RRC signalings, each of the K RRC signalings being used for configuring one cell; and K being an integer greater than 1; receiving the second signaling, the second signaling being used for triggering the application of one of the K RRC signalings; in response to any one of the K RRC signalings being unable to be successfully applied, executing the first operation set, the first operation set comprising the cell selection; and the first cell being the cell selected in the cell selection comprised in the first operation set, wherein, whether the first operation set comprises sending the first information depends on whether the first cell is configured by at least one of the K RRC signalings; only when the first cell is not configured by any of the K RRC signalings, the first operation set comprises sending the first information; and successfully applying one RRC signaling comprises applying one cell configured by the RRC signaling as the SpCell.

As one embodiment, the first communication device 450 corresponds to a first node in the present application.

As one embodiment, the second communication device 410 corresponds to a second node in the present application.

As one embodiment, the first communication device 450 is a piece of UE.

As one embodiment, the first communication device 450 is one vehicle-mounted terminal.

As one embodiment, the second communication device 450 is one relay.

As one embodiment, the second communication device 410 is one satellite.

As one embodiment, the second communication device 410 is one aircraft.

As one embodiment, the second communication device 410 is one base station.

As one embodiment, the receiving device 454 (comprising the antenna 452), the receiving processor 456 and the controller/processor 459 are used for receiving the K RRC signalings in the present application.

As one embodiment, the receiving device 454 (comprising the antenna 452), the receiving processor 456 and the controller/processor 459 are used for receiving the second signaling in the present application.

As one embodiment, the transmitting device 454 (comprising the antenna 452), the transmitting processor 468 and the controller/processor 459 are used for sending a first signal in the present application.

As one embodiment, the transmitting device 454 (comprising the antenna 452), the transmitting processor 468 and the controller/processor 459 are used for sending the first information in the present application.

### Embodiment 5

Embodiment 5 illustrates a flowchart of radio signal transmission according to one embodiment of the present application, as shown in FIG. 5. In FIG. 5, U01 corresponds to a first node of the present application. It is particularly noted that the order in this example does not limit the signal transmission order and implementation order in the present application, and steps in F51 and F52 are optional.

For a **first node U01,** in step S5101, K RRC signalings are received; in step S5102, a first signal is sent; in step S5103, a second signaling is received; in step S5104, one of the K RRC signalings is applied; and in step S5105, first information is sent.

For a **second node U02,** in step S5201, the K RRC signalings are sent; in step S5202, the first signal is received; in step S5203, the second signaling is sent; and in step S5204, the first information is received.

In Embodiment 5, each of the K RRC signalings is used for configuring at least one cell; and K is an integer greater than 1; the second signaling is used for triggering the application of one of the K RRC signalings; and any one of the K RRC signalings being unable to be successfully applied triggers the execution of a first operation set, the first operation set comprising cell selection; a first cell being a cell selected in the cell selection comprised in the first operation set, wherein, whether the first operation set comprises sending the first information depends on whether the first cell is configured by at least one of the K RRC signalings; only when the first cell is not configured by any of the K RRC signalings, the first operation set comprises sending the first information; and successfully applying one RRC signaling comprises applying one cell configured by the RRC signaling as a SpCell.

As one embodiment, the second node U02 is one base station.

As one embodiment, the second node U02 is one network device.

As one embodiment, the second node U02 is a source cell of the first node U01.

As one embodiment, the second node U02 is a source SpCell of the first node U01.

As one embodiment, the second node U02 is a PCell of the first node U01 when receiving the K RRC signalings.

As one embodiment, the second node U02 is a PSCell of the first node U01 when receiving the K RRC signalings.

As one embodiment, the first node U01 conducts handover from the second node U02 to the target SpCell.

As one embodiment, each of the K RRC signalings comprises pre-configured parameters for handover.

As one embodiment, after successful execution of step S5104 is completed by the first node U01, a SpCell of the first node U01 is a cell configured by the one of the K RRC signalings.

As one embodiment, an air interface between the first node U01 and the second node U02 is a Uu interface.

As one embodiment, the first node U01 is in an RRC connected state.

As one embodiment, cells configured by the K RRC signalings are nodes other than the second node U02.

As one embodiment, after the second node U02 receives the first signal, cell switch is determined.

As one embodiment, the second node U02 determines cell switch based on the first signal, and the first signal comprises a measurement result of an L1 or a target cell recommended based on the measurement result of the L1.

As one sub-embodiment of this embodiment, the target cell comprises the first cell.

As one embodiment, a meaning of an L3 (Layer 3)-based measurement comprises: using an L3 filter to process measurement data.

As one embodiment, a meaning of an L1 (Layer 1)-based measurement comprises: using an L1 filter to process measurement data.

As one embodiment, a measurement result of the L3 is smoother than a measurement result of the L1, but it takes longer time to obtain.

As one embodiment, the measurement result of the L1 can be obtained more quickly, but it is easy to cause ping-pong handover; and although a result of the L2 is more stable, the acquisition time is relatively long, which is easy to cause disconnection before handover. The method proposed in the present application may quickly conduct handover between a plurality of candidate cells, thereby avoiding disconnection and also avoiding the problem of data interruption caused by traditional ping-pong handover.

As one embodiment, the first node U01 does not need to use random access for at least one cell configured by the K RRC signalings.

As one embodiment, the K RRC signalings are used for configuring the first signal.

As one embodiment, step S5101 is before step S5102.

As one embodiment, step S5101 is before step S5103.

As one embodiment, step S5104 is after step S5103.

As one embodiment, step S5103 is after step S5102.

As one embodiment, step S5201 is before step S5202.

As one embodiment, step S5203 is after step S5202.

As one embodiment, the first signal is used for triggering the second signaling.

As one embodiment, a meaning of "the execution of the K RRC signalings depends on the second signaling" comprises: the K RRC signalings are not immediately executed or automatically executed after being received, but waits for the second signaling, and one of the K RRC signalings is executed only when it is triggered by the second signaling.

As one embodiment, the first node U01, in response to receiving the second signaling, starts a third timer, wherein, the third timer is an MAC (Medium Access Control) sublayer timer.

As one embodiment, a stopping condition of the third timer comprises: receiving a fourth signal.

As one sub-embodiment of this embodiment, the fourth signal is DCI.

As one sub-embodiment of this embodiment, the fourth signal is sent by the second node U02.

As one sub-embodiment of this embodiment, the fourth signal is an ACK.

As one embodiment, the fourth signal is used for confirming that handover is successful.

As one embodiment, the fourth signal is used for confirming that handover is completed.

As one embodiment, the fourth signal is used for confirming that execution of the one of the K RRC signalings is completed.

As one embodiment, the fourth signal is used for confirming that execution of the second signaling is completed.

As one embodiment, the stopping condition of the third timer comprises: random access to the target SpCell is completed.

As one embodiment, the stopping condition of the third timer comprises: execution of one of the K RRC signalings is completed.

As one embodiment, expiration of the third timer is used for determining a failure.

As one embodiment, the expiration of the third timer is used for determining a cell handover failure.

As one embodiment, the expiration of the third timer is used for determining a failure of execution of one of the K RRC signalings.

As one embodiment, the expiration of the third timer is used for RRC connection reestablishment.

As one embodiment, the expiration of the third timer is used for initiating beam failure recovery.

As one embodiment, the expiration of the third timer is used for retransmitting information comprised in the first signal.

As one embodiment, the expiration of the third timer is used for executing configurations for SpCells other than the target SpCell.

As one embodiment, the expiration of the third timer is used for determining that cells other than the target SpCell are new target SpCells, and executing corresponding configurations.

As one embodiment, the expiration of the third timer is used for triggering a fallback to the configuration prior to the execution of the one of the K RRC signalings.

As one embodiment, the expiration of the third timer is used for falling back to the communication state with the second node U02.

As one embodiment, the K RRC signalings or RRC messages carrying the K RRC signalings comprise the corresponding configurations.

As one embodiment, signalings other than the K RRC signalings comprise the corresponding configurations.

As one embodiment, the corresponding configurations comprise spCellConfig at least for the new target SpCells.

As one embodiment, execution of the corresponding configurations does not depend on reception of signalings from the second node U02.

As one embodiment, the third timer is started with the sending of the first signal.

As one embodiment, a fourth timer is started with the sending of the first signal.

As one embodiment, before expiration of the fourth timer, the first node U01 will no longer send MAC CEs with the same name as the MAC CEs comprised in the first signal.

As one embodiment, the first node U01 sends MAC CEs with the same name as the MAC CEs comprised in the first signal only after expiration of the fourth timer.

As one embodiment, the expiration of the fourth timer is used for triggering retransmission of information comprised in the first signal.

As one embodiment, the expiration of the fourth timer is used for triggering sending of a fifth signal, and the fifth signal comprises the same MAC CE as the first signal.

As one embodiment, the fifth signal is retransmission of the first signal.

As one embodiment, the fifth signal is generated in a physical layer.

As one embodiment, the fifth signal is generated in an MAC layer.

As one embodiment, the first signal comprises UCI (uplink control information).

As one embodiment, reception of the second signaling is used for stopping the third timer.

As one embodiment, the expiration of the fourth timer is used for determining that cells other than the target SpCell are new target SpCells, and executing corresponding configurations.

As one sub-embodiment of this embodiment, the K RRC signalings comprise the corresponding configurations.

As one sub-embodiment of this embodiment, the corresponding configurations comprise spCellConfig at least for the new target SpCells.

As one sub-embodiment of this embodiment, execution of the corresponding configurations does not depend on reception of signalings from the second node U02.

As one sub-embodiment of this embodiment, after executing the corresponding configurations, the first node U01 conducts handover to the new target SpCells.

As one embodiment, the second signaling is DCI.

As one embodiment, the first node U01 monitors a PDCCH to receive the second signaling.

As one embodiment, the second signaling comprises the MAC CE.

As one embodiment, the second signaling is unicast.

As one embodiment, the second signaling indicates reference signal resources of the target SpCell.

As one embodiment, the second signaling indicates beam information of the target SpCell.

As one embodiment, the first signal indicates the reference signal resources of the recommended target SpCell.

As one embodiment, the first signal indicates the beam information of the recommended target SpCell.

As one embodiment, in step S5104, applying one of the K RRC signalings comprises applying a TCI (transmission configuration indication) state.

As one embodiment, in step S5104, applying one of the K RRC signalings comprises applying the TCI (transmission configuration indication) state for the target SpCell.

As one embodiment, in step S5104, applying one of the K RRC signalings comprises applying the TCI (transmission configuration indication) state associated with the target SpCell.

As one embodiment, in step S5104, applying one of the K RRC signalings comprises applying a unified TCI state.

As one embodiment, after receiving the K RRC signalings, the first node U01 performs feedback confirmation.

As one embodiment, the K RRC signalings are comprised in at least one RRCReconfiguration message.

As one embodiment, the application of the one of the K RRC signalings is not accompanied by a random access process for a cell configured by the one of the K RRC signalings.

As one embodiment, the first signal is used for reporting a measurement result or reporting a recommended target cell or reporting a recommended reference signal resource.

As one embodiment, the K RRC signalings comprise a second threshold, and the second threshold is used for controlling the sending of the first signal.

As one sub-embodiment of this embodiment, only when a quality of a current cell does not meet the second threshold, the first signal is sent.

As one sub-embodiment of this embodiment, only when the measurement result meets the second threshold, the first signal is sent.

As one embodiment, the K RRC signalings indicate random access resources for a cell configured by the K RRC signalings.

As one embodiment, the first signal is used for triggering the second signal.

As one embodiment, the first node U01, in response to expiration of the fourth timer, reports a failure indication to a higher layer, and the fourth timer is a timer of the MAC layer.

As one embodiment, the first information comprises an RRC message.

As one embodiment, the first information is used for indicating whether at least one of the K RRC signalings is successfully executed.

As one embodiment, the first information is used for comprising a record of execution failure of the K RRC signalings.

As one embodiment, the first information comprises an identity of at least the target SpCell.

As one embodiment, the first information is used for indicating that a first event is detected.

As one embodiment, the first information is recorded and/or sent only when there is an ongoing application of any one of the K RRC signalings.

As one embodiment, the first information comprises an MAC layer control signaling.

As one embodiment, the first information comprises physical layer control information.

As one embodiment, the first information is retransmission of the first signal.

As one embodiment, the name of the first information is different from that of the first signal.

As one embodiment, the first information is used for triggering the second signaling.

As one embodiment, the K RRC signalings are valid only within a first time window.

As one sub-embodiment of this embodiment, the K RRC signalings or RRC messages comprising the K RRC signalings indicate the first time window.

As one embodiment, in response to any one of the K RRC signalings being unable to be successfully applied, the first node U01 will save failure information.

As one embodiment, when the first cell is not configured by any of the K RRC signalings, the first node U01 will save failure information.

As one embodiment, the first node U01 generates the first information according to the maintained failure information.

As one embodiment, after the first node U01 saves the failure information, the first node U01 indicates to the second node U02 that there is available failure information.

As one embodiment, when the second node U02 requests UE information or failure information from the first node U01, the first node U01 sends the first failure information.

As one embodiment, when the first operation set comprises sending the first information, the first operation set comprises saving information related to the K RRC signalings being unable to be successfully applied.

As one embodiment, when the first operation set comprises sending the first information, the first operation set comprises generating the first information according to the saved information related to the K RRC signalings being unable to be successfully applied.

As one embodiment, when the first operation set comprises sending the first information, the first operation set comprises generating the first information according to the stored information related to the K RRC signalings being unable to be successfully applied when receiving the request of the second node U02.

As one embodiment, each operation in the first operation set does not have to be executed simultaneously.

As one embodiment, operations in the first operation set may be executed after receiving the request.

### Embodiment 6

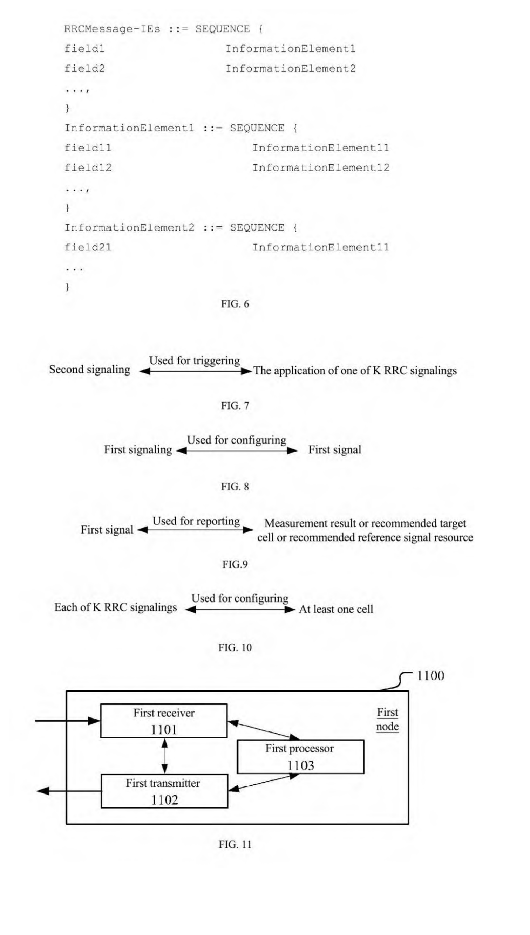

Embodiment 6 illustrates a schematic diagram of a signaling format according to one embodiment of the present application, as shown in FIG. 6.

field1, field2, field11, field12, and field21 in FIG. 6 are all fields.

As one embodiment, a format of an RRC message of the present application is based on relevant specifications of ISO ASN.1.

InformationElement1, InformationElement2, InformationElement11, and InformationElement12 in FIG. 6 are all RRC IEs.

As one embodiment, one RRC message comprises one or more RRC IEs (Information Elements), such as RRCMessage-IEs in FIG. 6.

As one embodiment, RRCMessage-IEs in FIG. 6 is one RRC IE.

As one embodiment, RRCMessage-IEs in FIG. 6 is any IE of one RRC message.

As one embodiment, one RRC IE comprises one or more fields, such as field1 and field2 comprised in RRCMessage-IEs in FIG. 6, such as Information.

As one embodiment, fields in FIG. 6 are applicable to a first field of the present application.

As one embodiment, fields in FIG. 6 are applicable to all fields and all RRC signalings of the present application.

As one embodiment, a value of one field in the RRC message may be one RRC IE, for example, in FIG. 6, the value of field1 is InformationElement1.

As one embodiment, one field in the RRC message bears or carries one RRC IE, for example, in FIG. 6, field1 bears or carries InformationElement1.

As one embodiment, one field in the RRC message corresponds to one RRC IE, for example, in FIG. 6, field1 corresponds to InformationElement1.

As one embodiment, in the RRC message, different fields may correspond to or carry or have the same RRC IE value, for example, field11 and field21 are both set to be InformationElement11.

As one embodiment, an IE in the RRC message may comprise one or more layers.

As one embodiment, the IE in the RRC message may comprise one or more sub-IEs.

As one embodiment, the IE in the RRC message may comprise one or more grandchild-IEs, and/or IEs of a deeper layer.

As one embodiment, the IE in the RRC message may comprise one or more sub-fields and/or grandchild-fields, for example, field1 is a sub-item of RRCMessage-IEs, and field11 is a grandchild-item of the RRCMessage-IE; and a sub-field of the IE in one RRC message may also comprise its own sub-fields or grandchild-fields, and so on.

As one embodiment, a meaning of "one field is reconfigurationWithSync" comprises: the name of the one field is "reconfigurationWithSync".

As one embodiment, the first field comprises a sub-field ReconfigurationWithSync.

As one embodiment, each of the K RRC signalings comprises one first field.

As one sub-embodiment of this embodiment, each of the K RRC signalings is spCellConfig.

As one embodiment, the first field is a sub-item of each of the K RRC signalings.

As one embodiment, the first field is a grandchild-item of each of the K RRC signalings.

As one embodiment, the first field is a sub-item of a grandchild-item of each of the K RRC signaling.

As one embodiment, the sub-item of one RRC IE is a first-layer item comprised in the one RRC IE.

As one embodiment, the grandchild-item of one RRC IE is a second-layer item comprised in the one RRC IE.

As one embodiment, a sub-item of the grandchild-item of one RRC IE is a third-layer item comprised in the one RRC IE.

As one embodiment, the first field of each of the K RRC signalings comprises a second field; and the second field is reconfigurationWithSync.

As one embodiment, execution of any signaling in the present application comprises executing part of fields, or part of sub-fields, or so on comprised in the any signaling.

As one embodiment, execution of any signaling in the present application comprises executing all fields comprised in the any signaling.

As one embodiment, a meaning of "executing all fields comprised in the any signaling" comprises: executing all sub-fields, grandchild-fields, and so on comprised in the any signaling.

As one embodiment, the meaning of "executing all fields comprised in the any signaling" comprises: executing information elements corresponding to any field comprised in the any signaling.

As one embodiment, the meaning of "executing all fields comprised in the any signaling" comprises: executing all information elements comprised in the any signaling.

As one embodiment, the any signaling is an RRC signaling.

As one embodiment, execution of any one of the K RRC signalings comprises executing part of information elements, or part of sub-information elements, or so on comprised in the any signaling.

As one embodiment, execution of any one of the K RRC signalings comprises executing all information elements comprised in the any signaling.

As one embodiment, execution of the first field comprised in any one of the K RRC signalings comprises executing information elements corresponding to the first field of the any signaling.

As one embodiment, execution of the second field comprised in the first field comprised in any one of the K RRC signalings comprises executing information elements corresponding to the second field comprised in the first field of any one of the K RRC signalings.

### Embodiment 7

Embodiment 7 illustrates a schematic diagram of a second signaling being used for triggering the application of one of K RRC signalings according to one embodiment of the present application, as shown in FIG. 7.

As one embodiment, the second signaling indicates handover to a target SpCell.

As one embodiment, the second signaling indicates execution of at least one of the K RRC signalings.

As one embodiment, the second signaling comprises an identity or a configuration index of at least one of the K RRC signalings.

As one embodiment, the second signaling indicates a first reference signal resource, and the first reference signal resource is associated with the target SpCell.

As one embodiment, the second signaling indicates a cell group to which the SpCell belongs.

As one embodiment, the second signaling indicates an identity or index of an event or condition, and the identity or index of the event or condition is associated with one of the K RRC signalings.

As one embodiment, the second signaling indicates one identity or configuration index, and the one identity or configuration index is associated with one of the K RRC signalings.

As one embodiment, the second signaling indicates one identity or configuration index, and the first identity or configuration index is comprised in a first signal.

As one embodiment, the second signaling implicitly indicates one of the K RRC signalings.

As one embodiment, the second signaling is associated with one of the K RRC signalings, and receiving the second signaling indicates execution of the one of the K RRC signalings.

As one embodiment, a logical channel identity of the second signaling is used for determining execution of one of the K RRC signalings.

As one embodiment, a first candidate SpCell indicated by the second signaling is configured by one of the K RRC signalings, and selecting the first candidate SpCell as the target SpCell triggers execution of the one of the K RRC signalings.

As one embodiment, the second signaling indicates a first candidate target SpCell and a second candidate target SpCell.

As one embodiment, the one of the K RRC signalings is for the first candidate target SpCell.

As one embodiment, one of the K RRC signalings is for the second candidate target SpCell.

As one embodiment, a first node arbitrarily selects the first candidate SpCell or a second candidate SpCell as the target SpCell.

As one embodiment, the first node preferentially selects the first candidate SpCell in the first candidate SpCell or the second candidate SpCell as the target SpCell.

As one embodiment, the second signaling is or comprises one field in a piece of DCI.

As one sub-embodiment of this embodiment, the piece of DCI is in one of formats 0_1, 0_0, and 1_0.

As one sub-embodiment of this embodiment, the piece of DCI is in a form with its name comprising "2_".

As one sub-embodiment of this embodiment, the piece of DCI is in a form with its name comprising "3_".

As one sub-embodiment of this embodiment, the piece of DCI is in a form with its name comprising "4_".

As one sub-embodiment of this embodiment, the piece of DCI is in a form with its name comprising "5_".

As one embodiment, the first signal is a piece of UCI on a specific PUCCH (physical uplink control channel) resource.

As one sub-embodiment of this embodiment, the specific PUCCH resource is a PUCCH resource configured by a serving cell of the first node.

As one sub-embodiment of this embodiment, the specific PUCCH (physical uplink control channel) resource is a PUCCH resource configured by a serving cell of the first node for transmitting the first signal.

As one embodiment, the second signaling comprises one PDCCH command.

As one embodiment, a resource indicated by the second signaling is associated with the target SpCell.

As one sub-embodiment of this embodiment, a resource indicated by the second signaling is associated with one of the K RRC signalings, and upon receiving the second signaling indicating the resource, the first node executes one of the K RRC signalings.

As one sub-embodiment of this embodiment, upon receiving the second signaling indicating the resource, the first node executes one of the K RRC signalings.

As one embodiment, the first signal indicates one of the K RRC signalings.

As one sub-embodiment of this embodiment, the second signaling is associated with the first signal.

As one sub-embodiment of this embodiment, upon receiving the second signaling, an RRC signaling of the K RRC signalings indicated by the first signal associated with the second signaling is executed.

As one sub-embodiment of this embodiment, the second signaling is associated with the first signal through one identity or identifier.

As one sub-embodiment of this embodiment, the second signaling is associated with the first signal through resources.

As one sub-embodiment of this embodiment, the second signaling is associated with the first signal in a preconfigured manner.

As one sub-embodiment of this embodiment, the second signaling is associated with the first signal through spatial parameters.

As one sub-embodiment of this embodiment, the second signaling is associated with the first signal through parameters or identities of the same cell group.

### Embodiment 8

Embodiment 8 illustrates a schematic diagram of a first signaling being used for configuring a first signal according to one embodiment of the present application, as shown in FIG. 8.

As one embodiment, the first signaling comprises at least one of the K RRC signalings.

As one embodiment, the first signaling is an RRC message.

As one embodiment, the first signaling comprises RRCReconfiguration.

As one embodiment, the first signaling indicates resources occupied by the first signal.

As one embodiment, the first signaling indicates the maximum number of items comprised in the first signal.

As one embodiment, the first signaling indicates a candidate SpCell set that can be recommended by the first signal.

As one embodiment, the first signaling indicates a reference signal resource for which a measurement result comprised in the first signal is directed.

As one embodiment, the first signaling indicates an identity or index of a candidate SpCell recommended by the first signal.

As one embodiment, the first signaling indicates the identity or index of the reference signal resource recommended by the first signal.

As one embodiment, the first signaling indicates whether the first signal comprises the recommended candidate SpCell.

As one embodiment, the first signaling indicates whether the first signal comprises the identity or index of the recommended reference signal resource.

As one embodiment, the first signaling indicates a triggering condition of the first signal.

As one embodiment, the triggering condition of the first signal comprises: time triggering.

As one embodiment, the triggering condition of the first signal comprises: event triggering.

As one embodiment, the triggering condition of the first signal comprises: a quality of a current serving cell is lower than a first threshold.

As one embodiment, the triggering condition of the first signal comprises: a measurement result of a configured first reference signal resource is lower than the first threshold.

As one embodiment, the triggering condition of the first signal comprises: the measurement result of the configured first reference signal resource is lower than the first threshold and lasts for a certain period of time.

As one embodiment, the triggering condition of the first signal comprises: the measurement result of the configured first reference signal resource is lower than the first threshold, and the measurement result of the reference signal resource in the configured second reference signal resource set is higher than a second threshold.

As one embodiment, the triggering condition of the first signal comprises: the measurement result of the configured first reference signal resource is lower than the first threshold, and the measurement result of the reference signal resource in a configured second reference signal resource set is higher than the second threshold and lasts for a certain period of time.

As one embodiment, the triggering condition of the first signal comprises: the measurement result of the configured first reference signal resource is lower than the first threshold, and the measurement result of the reference signal resource in the configured second reference signal resource set exceeds the measurement result of the first reference signal resource by at least XdB.

As one embodiment, the triggering condition of the first signal comprises: the measurement result of the configured first reference signal resource is lower than the first threshold, and the measurement result of the reference signal resource in the configured second reference signal resource set exceeds the measurement result of the first reference signal resource by at least XdB and lasts for a certain period of time.

As one embodiment, the first signaling indicates X, wherein X is a real number.

As one embodiment, the first signaling indicates the first threshold.

As one embodiment, the first signaling indicates the second threshold.

As one embodiment, the first signaling indicates the certain period of time.

As one embodiment, the first signaling configures a timer started with the sending of the first signal.

As one embodiment, the first signaling controls the timer for sending the first signal.

As one embodiment, the first signaling configures the timer triggered by the first signal.

As one embodiment, the first signaling configures the timer triggered by a second signaling.

As one embodiment, the first reference signal resource is used for radio link monitoring.

As one embodiment, the first reference signal resource is used for beam failure detection.

As one embodiment, the second reference signal resource set is used for radio link monitoring.

As one embodiment, the second reference signal resource set is used for beam failure detection.

As one embodiment, the second reference signal resource set is independently configured from the reference signal resource used for radio link monitoring.

As one embodiment, the second reference signal resource set is independently configured from the reference signal resource used for beam failure detection.

As one embodiment, the first reference signal resource is independently configured from the reference signal resource used for radio link monitoring.

As one embodiment, the first reference signal resource is independently configured from the reference signal resource used for beam failure detection.

As one embodiment, the first signaling indicates whether it is allowed to select other candidate SpCells after any one of the K RRC signalings is unable to be successfully applied.

As one embodiment, the first signaling indicates a first quality requirement.

As one embodiment, the first signaling indicates a first time window.

As one embodiment, the first signaling indicates the first threshold.

As one embodiment, the first signaling indicates the second threshold.

As one embodiment, the first signaling indicates whether it is allowed not to execute RRC connection reestablishment.

As one embodiment, the first signaling indicates whether it is allowed not to immediately execute RRC connection reestablishment.

As one embodiment, the first signaling indicates whether it is allowed to execute a CHO (conditional handover) evaluation after sending the first signal.

As one embodiment, the first signaling indicates whether it is allowed to execute a CHO evaluation after receiving the second signaling.

As one embodiment, the first signaling indicates whether it is allowed to execute a CPC (conditional PSCell Change) evaluation after sending the first signal.

As one embodiment, the first signaling indicates whether it is allowed to execute a CPC evaluation after receiving the second signaling.

As one embodiment, the first signaling indicates whether a recovery process based on the K RRC signalings is supported.

As one embodiment, the first signaling indicates whether a recovery process of LTM is supported.

As one embodiment, the first signaling indicates whether a recovery process of cell switch is supported.

As one embodiment, the first signaling indicates whether a recovery process based on signaling execution triggered by a dependency on one signaling is supported.

As one embodiment, the first signaling indicates whether a recovery process based on L1L2 mobility is supported.

As one embodiment, the first signaling indicates timing assistance information of the target SpCell.

As one embodiment, the second signaling indicates timing assistance information of the target SpCell.

As one embodiment, a first cell is selected as the target SpCell.

As one embodiment, execution of any one of the K RRC signalings does not stop an evaluation for radio link failure.

As one embodiment, the first signal comprises an identity or index of a reference signal in a second reference signal set.

As one embodiment, the first signal does not comprise the identity or index of the target SpCell.

As one embodiment, the size of the first signal is 0.

As one embodiment, the size of the first signal is greater than 0.

As one embodiment, the priority of the first signal is one of the highest in MAC CEs.

As one embodiment, the first signal only comprises an MAC subheader.

As one embodiment, the first signal comprises a first measurement report.

As one embodiment, the first signaling is used for configuring the first measurement report, comprising: configuring a sending time of the first measurement report.

As one embodiment, the first signaling is used for configuring the first measurement report, comprising: configuring a measurement quantity of the first measurement report, such as RSRP.

As one embodiment, the first signaling is used for configuring the first measurement report, comprising: configuring the precision of the first measurement report.

As one embodiment, the first signaling is used for configuring the first measurement report, comprising: configuring a cell for which the first measurement report is directed.

As one embodiment, the first signaling is used for configuring the first measurement report, comprising: configuring the reference signal resource for which the first measurement report is directed.

As one embodiment, the first signaling is used for configuring the first measurement report, comprising: configuring an identity for which the first measurement report is directed.

As an embodiment, the first signaling is used for configuring the first measurement report, comprising: configuring a time to trigger (TTT) of the first measurement report.

As one embodiment, the first measurement report does not correspond to any measurement object.

As one embodiment, the first measurement report comprises L1-RSRP.

### Embodiment 9

Embodiment 9 illustrates a schematic diagram of a first signal being used for reporting a measurement result or a recommended target cell or a recommended reference signal resource according to one embodiment of the present application, as shown in FIG. 9.

As one embodiment, the first signal comprises the measurement result.

As one embodiment, the measurement result comprised in the first signal is for a cell configured by K RRC signalings.

As one embodiment, the measurement result comprised in the first signal is for at least one cell configured by the K RRC signalings.

As one embodiment, the measurement result comprised in the first signal is for a first cell.

As one embodiment, a serving cell of a first node configures first measurement.

As one embodiment, the first measurement is an L1 measurement.

As one embodiment, the first measurement is measurement for a first reference signal resource set.

As one embodiment, a first signaling comprises at least one of the K RRC signalings.

As one embodiment, the first signaling is an RRC message.

As one embodiment, the first signaling comprises RRCReconfiguration.

As one embodiment, the serving cell of the first node configures the first measurement through the first signaling.

As one embodiment, the first measurement comprises measuring RSRP of the L1.

As one embodiment, the first measurement comprises obtaining channel state information.

As one embodiment, the first signal reports a result of the first measurement.

As one embodiment, the first signal is sent only after the first measurement is completed.

As one embodiment, the first measurement is periodic.

As one embodiment, the first signal is event-based and periodic.

As one embodiment, the first signal is sent periodically.

As one embodiment, when a triggering condition is met, the first signal is also sent periodically.

As one embodiment, the triggering condition comprises that a quality of a current cell is lower than a given threshold.

As one embodiment, the triggering condition comprises that the quality of the target cell is higher than another given threshold.

As one embodiment, a result of the first measurement comprises measurement for a plurality of cells.

As one embodiment, the first measurement is for PCIs of the plurality of cells.

As one embodiment, the first signal comprises the recommended target cell.

As one embodiment, the first signal indicates an identity of the target cell or an index of the target cell.

As one sub-embodiment of this embodiment, the first signal does not comprise measurement results.

As one sub-embodiment of this embodiment, the index of the target cell is an index configuring the first measurement.

As one sub-embodiment of this embodiment, the index of the target cell is an index of the K RRC signalings.

As one sub-embodiment of this embodiment, an index of the target cell in the first signal is the same as an index in the configuration of the first measurement.

As one embodiment, the first node determines the recommended target cell according to results of the first measurement.

As one embodiment, the first node determines the recommended target cell according to parameters of conditions or criteria configured in the first signaling.

As one embodiment, the first node determines the recommended target cell according to an S criterion.

As one embodiment, the first node determines the recommended target cell according to an internal algorithm.

As one embodiment, the first signal indicates a plurality of recommended target cells.

As one embodiment, the first cell is one of the plurality of target cells.

As one embodiment, a target SpCell is one target cell indicated by the first signal.

As one embodiment, the recommended reference signal resource corresponds to one reference signal.

As one embodiment, the first signal comprises the index or identity of the recommended reference signal resource.

As one embodiment, the recommended reference signal resource comprised in the first signal comprises CSI-RS resources.

As one embodiment, the recommended reference signal resource comprised in the first signal comprises SSB resources.

As one embodiment, the recommended reference signal resource comprised in the first signal belongs to the first reference signal resource set.

As one embodiment, an index of the recommended reference signal resource comprised in the first signal is an index of the recommended reference signal resource in the first reference signal resource set.

As one embodiment, each reference signal resource in the first reference signal resource set is associated with one cell identity.

As one embodiment, each reference signal resource in the first reference signal resource set is mapped to one cell identity.

As one embodiment, the first signal indicates the recommended target cell by indicating the identity or index of a measurement configuration.

As one embodiment, the first signal indicates the recommended reference signal resource by indicating the identity or index of the measurement configuration.

As one embodiment, the first signal implicitly indicates the recommended target cell.

As one embodiment, the first signal implicitly indicates the recommended reference signal resource.

As one embodiment, the first signal may be used for beam failure recovery.

As one embodiment, an MAC CE name comprised in a second signaling comprises L1L2.

As one embodiment, the MAC CE name comprised in the second signaling comprises L2.

As one embodiment, the MAC CE name comprised in the second signaling comprises Mobility.

As one embodiment, the MAC CE name comprised in the first signal comprises L1L2.

As one embodiment, the MAC CE name comprised in the first signal comprises L2.

As one embodiment, the MAC CE name comprised in the first signal comprises Mobility.

As one embodiment, the MAC CE name comprised in the first signal comprises BFR.

As one embodiment, the first signal may comprise a target cell for a PCell and a target cell for a PSCell at the same time.

As one embodiment, the first signal may only comprise one of the target cell for the PCell and the target cell for the PSCell.

As one embodiment, the recommended target cell or the plurality of target cells indicated by the first signal are candidate target cells.

As one embodiment, the first signal comprises a first indication field, and the first indication field is used for indicating whether the recommended target cell is the target cell for the PCell or the target cell for the PSCell.

As one sub-embodiment of this embodiment, the first indication field occupies one bit.

As one embodiment, the first signal may simultaneously indicate the recommended candidate cell and the recommended reference signal resource.

As one embodiment, the recommended reference signal resource is also a recommended reference signal.

As one embodiment, one of the first signal and the second signaling is DCI and the other is the MAC CE.

As one embodiment, the first signal and the second signaling are both MAC CEs.

As one embodiment, the K RRC signalings indicate that random access resources for a configured cell are valid within a first window.

As one embodiment, the first node starts a fourth timer with the sending of the first signal.

As one embodiment, before expiration of the fourth timer, execution of the K RRC signalings does not relate to or accompany a random access process.

As one embodiment, after expiration of the fourth timer, accompanied by execution of one of the K RRC signalings, the first node initiates random access to a target cell.

As one embodiment, in response to receiving the second signaling, the first node stops sending a signal for reporting a measurement result or a recommended target cell or a recommended reference signal resource.

As one sub-embodiment of this embodiment, the stopping sending refers to stopping sending during operation of a third timer.

As one embodiment, in response to receiving the second signaling, the first node stops sending an MAC CE with the same name as the MAC CE comprised in the first signal.

As one sub-embodiment of this embodiment, the stopping sending refers to stopping sending during operation of the third timer.

As one embodiment, in response to receiving the second signaling, the first node stops sending an MAC PDU with the same logical channel as that used by the first signal.

As one sub-embodiment of this embodiment, the stopping sending refers to stopping sending during operation of the third timer.

As one embodiment, in response to receiving the second signaling, the first node stops sending retransmissions or copies of the first signal.

As one sub-embodiment of this embodiment, the stopping sending refers to stopping sending during operation of the third timer.

As one embodiment, in response to receiving the second signaling, the first node cancels a triggered L1 measurement result report process.

As one embodiment, in response to receiving the second signaling, the first node cancels a recommended cell or recommended reference signal resource report process.

As one embodiment, the first signal recommends both a target cell and a reference signal resource.

As one embodiment, the name of the first signal comprises Mobility.

As one embodiment, the name of the first signal comprises L2.

As one embodiment, the name of the first signal comprises LTM.

As one embodiment, the name of the second signaling comprises Mobility.

As one embodiment, the name of the second signaling comprises L2.

As one embodiment, the name of the second signaling comprises LTM.

As one embodiment, the names of the K RRC signalings comprise LTM.

### Embodiment 10

Embodiment 10 illustrates a schematic diagram of each of K RRC signaling being used for configuring at least one cell according to one embodiment of the present application, as shown in FIG. 10.

As one embodiment, each of the K RRC signalings comprises a third field, the third field is used for configuring a SpCell, and each of the K RRC signalings is used for configuring at least one cell that is configured by the third field.

As one sub-embodiment of this embodiment, the third field is SpCellConfig.

As one sub-embodiment of this embodiment, the third field is SpCellConfigCommon.

As one sub-embodiment of this embodiment, the third domain is SpCellConfigDedicated.

As one embodiment, each of the K RRC signalings comprises the third field, the third field is used for configuring a SpCell, and each of the K RRC signalings is used for configuring one cell that is a SpCell or a target SpCell.

As one sub-embodiment of this embodiment, the third field is SpCellConfig.

As one sub-embodiment of this embodiment, the third field is SpCellConfigCommon.

As one sub-embodiment of this embodiment, the third domain is SpCellConfigDedicated.

As one sub-embodiment of this embodiment, when any one of the K RRC signalings is successfully applied, a cell configured by the any one of the K RRC signalings is applied as a SpCell.

As one embodiment, the name of each of the K RRC signalings is the same.

As one embodiment, each of the K RRC signalings configures one cell.

As one sub-embodiment of this embodiment, cells configured by RRC signalings of the K RRC signalings are different.

As one sub-embodiment of this embodiment, cells configured by RRC signalings of the K RRC signalings may be the same.

As one embodiment, each of the K RRC signalings configures one cell group.

As one sub-embodiment of this embodiment, a cell configured by each of the K RRC signalings is a PCell of a cell group configured by each of the K RRC signalings, and the cell group configured by each of the K RRC signalings is an MCG.

As one sub-embodiment of this embodiment, a cell configured by each of the K RRC signalings is a PSCell of a cell group configured by each of the K RRC signalings, and the cell group configured by each of the K RRC signalings is an SCG.

As one embodiment, each of the K RRC signalings comprises one cell identity, and each of the K RRC signaling is used for configuring one cell that is a cell identified by the one cell identity comprised in each of the K RRC signalings.

As one embodiment, each of the K RRC signalings indicates at least one target SpCell.

As one embodiment, each of the K RRC signalings explicitly indicates at least one cell.

As one embodiment, a meaning of a phrase "each of the K RRC signalings being used for configuring at least one cell" comprises: configuring an identity of the at least one cell.

As one embodiment, the meaning of the phrase "each of the K RRC signalings being used for configuring at least one cell" comprises: configuring at least one timer of the at least one cell.

As one sub-embodiment of this embodiment, the at least one timer comprises T310.

As one sub-embodiment of this embodiment, the at least one timer comprises T312.

As one sub-embodiment of this embodiment, the at least one timer comprises T311.

As one sub-embodiment of this embodiment, the at least one timer is used for radio link failure.

As one embodiment, the meaning of the phrase "each of the K RRC signalings being used for configuring at least one cell" comprises: configuring physical layer resources of the at least one cell.

As one embodiment, the meaning of the phrase "each of the K RRC signalings being used for configuring at least one cell" comprises: configuring reference signal resources of the at least one cell.

As one embodiment, the meaning of the phrase "each of the K RRC signalings being used for configuring at least one cell" comprises: configuring random access resources of the at least one cell.

As one embodiment, the meaning of the phrase "each of the K RRC signalings being used for configuring at least one cell" comprises: configuring a frequency of the at least one cell.

As one embodiment, the meaning of the phrase "each of the K RRC signalings being used for configuring at least one cell" comprises: configuring an SSB (synchronization signal block) of the at least one cell.

As one embodiment, the meaning of the phrase "each of the K RRC signalings being used for configuring at least one cell" comprises: configuring a physical layer channel of the at least one cell.

As one embodiment, each of the K RRC signalings is used for configuring one PCell and at least one SCell belonging to the same cell group as the PCell.

As one sub-embodiment of this embodiment, a PCell only belongs to an MCG.

As one embodiment, each of the K RRC signalings is used for configuring one PSCell and at least one SCell (Secondary cell) belonging to the same cell group as the PSCell.

As one sub-embodiment of this embodiment, the PSCell only belongs to an SCG.

As one embodiment, a meaning of a phrase "the first cell being not configured by any of the K RRC signalings" comprises: a cell configured by each of the K RRC signalings is not the first cell.

As one embodiment, the meaning of the phrase "the first cell being not configured by any of the K RRC signalings" comprises: a PCell configured by any one of the K RRC signalings is not the first cell.

As one sub-embodiment of this embodiment, the any one of the K RRC signalings is for an MCG.

As one embodiment, the meaning of the phrase "the first cell being not configured by any of the K RRC signalings" comprises: a PSCell configured by any one of the K RRC signalings is not the first cell.

As one sub-embodiment of this embodiment, the any one of the K RRC signalings is for an SCG.

As one embodiment, the meaning of "the first cell being configured by at least one of the K RRC signalings" comprises: a cell configured by at least one of the K RRC signalings is the first cell.

As one embodiment, the meaning of "the first cell being configured by at least one of the K RRC signalings" comprises: a PCell configured by at least one of the K RRC signalings is the first cell.

As one sub-embodiment of this embodiment, at least one of the K RRC signalings is for an MCG.

As one embodiment, the meaning of "the first cell being configured by at least one of the K RRC signalings" comprises: a PSCell configured by at least one of the K RRC signalings is the first cell.

As one sub-embodiment of this embodiment, the at least one of the K RRC signalings is for an SCG.

As one embodiment, the meaning of the phrase "the first cell being not configured by any of the K RRC signalings" comprises: the first cell is not a target cell configured by the K RRC signalings.

As one embodiment, the meaning of the phrase "the first cell being not configured by any of the K RRC signalings" comprises: the first cell is not a target SpCell configured by the K RRC signalings.

### Embodiment 11

Embodiment 11 illustrates a structural block diagram of a processing apparatus used in a first node according to one embodiment of the present application, as shown in FIG. 11. In FIG. 11, the processing apparatus 1100 in the first node comprises a first receiver 1101, a first transmitter 1102, and a first processor 1103. In Embodiment 11,
the first receiver 1101 receives K RRC signalings, each of the K RRC signalings being used for configuring at least one cell; and K is an integer greater than 1;
the first receiver 1101 receives a second signaling, the second signaling being used for triggering the application of one of the K RRC signalings;
the first processor 1103, in response to any one of the K RRC signalings being unable to be successfully applied, executes a first operation set, the first operation set comprising cell selection; and a first cell being a cell selected in the cell selection comprised in the first operation set,
wherein, whether the first operation set comprises sending first information depends on whether the first cell is configured by at least one of the K RRC signalings; only when the first cell is not configured by any of the K RRC signalings, the first operation set comprises sending the first information; and successfully applying one RRC signaling comprises applying one cell configured by the RRC signaling as a SpCell.

As one embodiment, the cell selection comprised in the first operation set comprises: preferentially selecting a cell configured by the K RRC signalings, and after one cell configured by the K RRC signalings is selected, applying an RRC signaling among the K RRC signalings that is used for configuring the one cell.

As one embodiment, the cell selection comprised in the first operation set comprises: before successfully applying one of the K RRC signalings, at most N cell selections are executed in a cell configured by the K RRC signalings, N being a positive integer not greater than K.

As one embodiment, a meaning of a phrase "any one of the K RRC signalings being unable to be successfully applied" comprises: a first timer expires; and the first timer is started with the application of any one of the K RRC signalings.

As one embodiment, the meaning of the phrase "any one of the K RRC signalings being unable to be successfully applied" comprises: N cell selections are executed in a cell configured by the K RRC signalings before successfully applying one of the K RRC signalings.

As one embodiment, the meaning of the phrase "any one of the K RRC signalings being unable to be successfully applied" comprises: a quality of a cell configured by the any one of the K RRC signalings fails to meet a first quality requirement.

As one embodiment, the first information comprises an L1-based measurement result and an L3-based measurement result.

As one embodiment, the first information is used for indicating a reason for cell switch failure.

As one embodiment, the first information is used for indicating the first cell.

As one embodiment, the first node is a piece of user equipment (UE).

As one embodiment, the first node is one terminal supporting a large latency difference.

As one embodiment, the first node is one terminal supporting an NTN.

As one embodiment, the first node is one aircraft or ship.

As one embodiment, the first node is one mobile phone or vehicle-mounted terminal.

As one embodiment, the first node is one relay UE and/or U2N remote UE.

As one embodiment, the first node is one Internet of Things terminal or industrial Internet of Things terminal.

As one embodiment, the first node is one device supporting low-latency and high-reliability transmission.

As one embodiment, the first node is a secondary link communication node.

As one embodiment, the first receiver 1101 comprises at least one of an antenna 452, a receiving device 454, a receiving processor 456, a multi-antenna receiving processor 458, a controller/processor 459, a memory 460, or a data source 467 in Embodiment 4.

As one embodiment, the first transmitter 1102 comprises at least one of the antenna 452, a transmitting device 454, a transmitting processor 468, a multi-antenna transmitting processor 457, the controller/processor 459, the memory 460, or the data source 467 in Embodiment 4.

Those of ordinary skill in the art can understand that all or part of the steps in the above method may be completed by instructing relevant hardware through a program, and the program may be stored in a computer-readable storage medium, such as a read-only memory, a hard disk or an optical disk. Optionally, all or part of the steps in the above embodiments may also be implemented using one or more integrated circuits. Accordingly, each module unit in the above embodiments may be implemented in the form of hardware or in the form of a software function module, and the present application is not limited to any specific form of software and hardware combination. The user equipment, terminals and UE in the present application include but are not limited to drones, communication modules on drones, remote-controlled aircrafts, aircrafts, small aircrafts, mobile phones, tablet computers, notebooks, vehicle-mounted communication devices, wireless sensors, Internet cards, Internet of Things terminals, RFID terminals, NB-IoT terminals, MTC (Machine Type Communication) terminals, eMTC (enhanced MTC) terminals, data cards, Internet cards, vehicle-mounted communication devices, low-cost mobile phones, low-cost tablet computers, satellite communication devices, ship communication devices, NTN user equipment and other wireless communication devices. Base stations or system devices in the present application include but are not limited to macrocell base stations, microcell base stations, femtocells, relay base stations, gNBs (NR nodes B), TRPs (Transmitter Receiver Points), NTN base stations, satellite devices, flight platform devices and other wireless communication devices.

The present disclosure can be implemented in other specified forms without departing from its core or basic features. Therefore, the embodiments disclosed at present should be regarded as descriptive rather than restrictive in any case. The scope of the invention is determined by the appended claims rather than the previous description, and all changes within their equivalent meanings and areas are deemed to be comprised therein.

## Claims

1. A first node for wireless communication, comprising:
a first receiver, receiving K RRC (Radio Resource Control) signalings, each of the K RRC signalings being used for configuring at least one cell; and K being an integer greater than 1;
the first receiver, receiving a second signaling, the second signaling being used for triggering the application of one of the K RRC signalings; and
a first processor, in response to any one of the K RRC signalings being unable to be successfully applied, executing a first operation set, the first operation set comprising cell selection; and a first cell being a cell selected in the cell selection comprised in the first operation set,
wherein, whether the first operation set comprises sending first information depends on whether the first cell is configured by at least one of the K RRC signalings; only when the first cell is not configured by any of the K RRC signalings, the first operation set comprises sending the first information; and successfully applying one RRC signaling comprises applying one cell configured by the RRC signaling as a SpCell (Special Cell).

2. The first node according to claim 1, wherein
the cell selection comprised in the first operation set comprises: preferentially selecting a cell configured by the K RRC signalings, and after one cell configured by the K RRC signalings is selected, applying an RRC signaling among the K RRC signalings that is used for configuring the one cell.

3. The first node according to claim 1 or 2, wherein
the cell selection comprised in the first operation set comprises: before successfully applying one of the K RRC signalings, executing at most N cell selections in a cell configured by the K RRC signalings, N being a positive integer not greater than K.

4. The first node according to any one of claims 1 to 3, wherein
a meaning of a phrase "any one of the K RRC signalings being unable to be successfully applied" comprises: a first timer expires; and the first timer is started with the application of any one of the K RRC signalings.

5. The first node according to any one of claims 1 to 4, wherein
a meaning of a phrase "any one of the K RRC signalings being unable to be successfully applied" comprises: N cell selections are executed in a cell configured by the K RRC signalings before successfully applying one of the K RRC signalings.

6. The first node according to any one of claims 1 to 5, wherein
a meaning of a phrase "any one of the K RRC signalings being unable to be successfully applied" comprises: a quality of a cell configured by any one of the K RRC signalings fails to meet a first quality requirement.

7. The first node according to any one of claims 1 to 6, wherein
the first information comprises an L1-based measurement result and an L3-based measurement result.

8. The first node according to any one of claims 1 to 7, wherein
the first information is used for indicating a reason for cell switch failure.

9. The first node according to any one of claims 1 to 8, wherein
the first information is used for indicating the first cell.

10. A method used in a first node for wireless communication, comprising:
receiving K RRC signalings, each of the K RRC signalings being used for configuring at least one cell; and K being an integer greater than 1;
receiving a second signaling, the second signaling being used for triggering the application of one of the K RRC signalings; and
in response to any one of the K RRC signalings being unable to be successfully applied, executing a first operation set, the first operation set comprising cell selection; and a first cell being a cell selected in the cell selection comprised in the first operation set,
wherein, whether the first operation set comprises sending first information depends on whether the first cell is configured by at least one of the K RRC signalings; only when the first cell is not configured by any of the K RRC signalings, the first operation set comprises sending the first information; and successfully applying one RRC signaling comprises applying one cell configured by the RRC signaling as a SpCell.

11. The method used in a first node according to claim 10, wherein
the cell selection comprised in the first operation set comprises: preferentially selecting a cell configured by the K RRC signalings, and after one cell configured by the K RRC signalings is selected, applying an RRC signaling among the K RRC signalings that is used for configuring the one cell.

12. The method used in a first node according to claim 10 or 11, wherein
the cell selection comprised in the first operation set comprises: before successfully applying one of the K RRC signalings, executing at most N cell selections in a cell configured by the K RRC signalings, N being a positive integer not greater than K.

13. The method used in a first node according to any one of claims 10 to 12, comprising:
a meaning of a phrase "any one of the K RRC signalings being unable to be successfully applied" comprises: a first timer expires; and the first timer is started with the application of any one of the K RRC signalings.

14. The method used in a first node according to any one of claims 10 to 13, comprising:
a meaning of a phrase "any one of the K RRC signalings being unable to be successfully applied" comprises: N cell selections are executed in a cell configured by the K RRC signalings before successfully applying one of the K RRC signalings.

15. The method used in a first node according to any one of claims 10 to 14, comprising:
a meaning of a phrase "any one of the K RRC signalings being unable to be successfully applied" comprises: a quality of a cell configured by any one of the K RRC signalings fails to meet a first quality requirement.

16. The method used in a first node according to any one of claims 10 to 15, wherein
the first information comprises an L1-based measurement result and an L3-based measurement result.

17. The method used in a first node according to any one of claims 10 to 16, wherein
the first information is used for indicating a reason for cell switch failure.

18. The method used in a first node according to any one of claims 10 to 17, wherein
the first information is used for indicating the first cell.
